# EUROPEAN PATENT APPLICATION

(11) **EP 4 691 847 A1**
(43) Date of publication of application: **11.02.2026**
(21) Application number: 24780265.5
(22) Date of filing: 26.03.2024
(51) Int. Cl.: B60N 2/56, A47C 7/74, A47C 27/00, B60H 1/00, B60H 1/34, B60N 2/90

(54) **VEHICLE SEAT AND METHOD FOR MANUFACTURING VEHICLE SEAT**

(30) Priority: 29.03.2023 JP 2023053450; 07.08.2023 US 202363517981 P
(71) Applicant: TS Tech Co., Ltd., Asaka-shi, Saitama 351-0012 (JP)
(72) Inventor: MIZOI Kensuke, Shioya-gun, Tochigi 329-1217 (JP); TAKANOHASHI Hiroshi, Shioya-gun, Tochigi 329-1217 (JP)
(74) Representative: Plougmann Vingtoft a/s
(86) International application number: PCT/JP2024/011868
(87) International publication number: WO 2024/204152

(57) **Abstract**

A vehicle seat capable of restraining a duct and a sensor from interfering with each other and a method for manufacturing the vehicle seat is provided. The vehicle seat includes a seat frame (F) including left and right first side frames (11) disposed laterally apart from each other, a pressure-receiving member (30) configured to support an occupant and disposed between the left and right first side frames (11), a pad configured to cover the seat frame (F) and the pressure-receiving member (30) and including an air passage formed therein, a blower (110), a duct (120) configured to connect the blower (110) and the air passage, and a sensor (140) capable of acquiring biometric information of the occupant. The pressure-receiving member (30) includes a central wire (32A) (reinforcing wire) extending in the front-rear direction. The duct (120) is located on one side in the lateral direction with respect to the central wire (32A), and the sensor (140) is located on another side in the lateral direction with respect to the central wire (32A).

## Description

### TECHNICAL FIELD

The present invention relates to a vehicle seat and a method for manufacturing the vehicle seat.

### BACKGROUND ART

A car seat including left and right side frames, a front frame connected to front end portions of the left and right side frames, a rear frame connected to rear end portions of the left and right side frames, a support panel for supporting an occupant, and a seat pad that covers the support panel is known in the art (Patent Document 1). The support panel is formed by bending a metal plate-shaped member, and is bridged across and attached to the front frame and the rear frame. A blower is fixed to a back surface of the support panel. An air passage is formed in the seat pad into which air from the blower flows.

### CITATION LIST

### PATENT DOCUMENT

Patent Document 1: JP 2012-197032 A

### SUMMARY OF INVENTION

It would be desirable to restrain a duct and a sensor from interfering with each other when a duct connecting a blower and an air passage and a sensor for acquiring biometric information of an occupant is provided on a vehicle seat.

Thus, an object is to provide a vehicle seat that is capable of restraining the duct and the sensor from interfering with each other and a method for manufacturing the vehicle seat.

Further, in a vehicle seat, it would be desirable that vibrations caused by the operation of the blower are less likely to be transmitted to the occupant.

Thus, an object is to provide a vehicle seat that is capable of restraining vibrations caused by the operation of the blower.

A vehicle seat comprises a seat frame including left and right side frames disposed laterally apart from each other, a pressure-receiving member that supports an occupant and is disposed between the left and right side frames, a pad that covers the seat frame and the pressure-receiving member and includes an air passage formed therein, a blower, a duct that connects the blower and the air passage, and a sensor capable of acquiring biometric information of the occupant, wherein the pressure-receiving member comprises a reinforcing wire that extends in a first direction perpendicular to a lateral direction, the duct is located on one side in the lateral direction with respect to the reinforcing wire, and the sensor is located on another side in the lateral direction with respect to the reinforcing wire.

Since duct is located on one side in the lateral direction with respect to the reinforcing wire, and the sensor is located on another side in the lateral direction with respect to the reinforcing wire, the duct and the sensor can be restrained from interfering with each other.

The duct may be located on the one side in the lateral direction with respect to a lateral central portion of the pressure-receiving member, and the sensor may be located on the another side in the lateral direction with respect to the lateral central portion of the pressure-receiving member.

Since the duct is located on the one side in the lateral direction with respect to the lateral central portion of the pressure-receiving member, and the sensor is located on the another side in the lateral direction with respect to the lateral central portion of the pressure-receiving member, the duct and the sensor can be restrained from interfering with each other.

The pressure-receiving member may comprise a first side wire located on the one side in the lateral direction with respect to the reinforcing wire, and a second side wire located on the another side in the lateral direction with respect to the reinforcing wire, and the duct and the sensor may be located between the first side wire and the second side wire as viewed from an occupant side.

Since the duct and the sensor are located between the first side wire and the second side wire as viewed from the occupant side, the duct and the sensor can be protected by the first side wire and the second side wire.

The pressure-receiving member may be configured to comprise a first sensor mounting portion to which the sensor is attachable and which is located on the one side in the lateral direction with respect to the reinforcing wire and adjacent to the reinforcing wire, and a second sensor mounting portion to which the sensor is attachable and which is located on the another side in the lateral direction with respect to the reinforcing wire and adjacent to the reinforcing wire, wherein each of the first sensor mounting portion and the second sensor mounting portion includes a first clamping portion that clamps the sensor when the sensor is attached, wherein the first clamping portion of the first sensor mounting portion is located between a central portion of the first sensor mounting portion and the reinforcing wire in the lateral direction, and wherein the first clamping portion of the second sensor mounting portion is located between a central portion of the second sensor mounting portion and the reinforcing wire in the lateral direction.

Since the first clamping portion of the first sensor mounting portion is located between a central portion of the first sensor mounting portion and the reinforcing wire in the lateral direction, and the first clamping portion of the second sensor mounting portion is located between a central portion of the second sensor mounting portion and the reinforcing wire in the lateral direction, the first clamping portions can be located near the reinforcing wire. In this way, the rigidity of the first clamping portions can be increased by the reinforcing wire.

Each of the first sensor mounting portion and the second sensor mounting portion may include a second clamping portion that clamps the sensor when the sensor is attached, and a third clamping portion that clamps the sensor when the sensor is attached and is aligned with the second clamping portion in the first direction.

Since each of the first sensor mounting portion and the second sensor mounting portion includes the first clamping portion, the second clamping portion, and the third clamping portion, the sensor can be firmly attached to the pressure-receiving member when the sensor is attached.

The pressure-receiving member may include a first hole that allows the duct to pass therethrough and located on the one side in the lateral direction with respect to the first sensor mounting portion and adjacent to the first sensor mounting portion, and a second hole that allows the duct to pass therethrough and is located on the another side in the lateral direction with respect to the second sensor mounting portion and adjacent to the second sensor mounting portion.

Since the first hole is located on the side of a central portion of the first sensor mounting portion opposite to a side on which the first clamping portion is located, and the second hole is located on a side of a central portion of the second clamping portion opposite to a side on which the first clamping portion is located, the first clamping portion and the duct can be located apart when the duct extends through the first hole or the second hole. In this way, the first clamping portion and the duct can be restrained from interfering with each other.

The vehicle seat may comprise a harness electrically connected to the sensor and extending outward from the sensor toward a side of the sensor opposite to a side on which the first clamping portions are located in the lateral direction.

Since the harness extends outward from the sensor toward a side of the sensor opposite to a side on which the first clamping portions are located in the lateral direction, the harness and the first clamping portion can be restrained from interfering with each other.

Each of the first sensor mounting portion and the second sensor mounting portion may include a recess recessed toward a corresponding first clamping portion, from an edge opposite to an edge on which the corresponding first clamping portion is located in the lateral direction.

Since each of the first sensor mounting portion and the second sensor mounting portion includes a recess, the harness and the sensor mounting portion can be restrained from interfering with each other when the sensor, to which a harness is connected, is attached.

The pressure-receiving member may comprise a plastic member configured to cover the reinforcing wire, and the plastic member may be made of elastomer.

Since the plastic member covering the reinforcing wire is made of elastomer, the comfort of the car seat can be improved.

The pressure-receiving member may include a through hole that allows the duct to pass therethrough, and a mesh portion forming a web shape, and an edge of the through hole may be thicker than a portion of the mesh portion that forms a mesh as viewed from an occupant side.

Since the edge of the through hole of the pressure-receiving member is thicker than the portion of the mesh portion that forms the mesh as viewed from the occupant side, the through hole can be made less susceptible to deformation. In this way, the edge of the through hole and the duct extending through the through hole can be restrained from interfering with each other.

A part of the portion of the mesh portion that forms the mesh may be connected to the edge of the through hole.

Since the part of the portion of the mesh portion that forms the mesh of the pressure-receiving member is connected to the edge of the through hole, the through hole can be further made less susceptible to deformation. In this way, the edge of the through hole and the duct can be further restrained from interfering with each other.

The pressure-receiving member may comprise a mounting portion configured to attach another member to the pressure-receiving member and including a first mounting portion located frontward of the sensor.

Since the first mounting portion is located frontward of the sensor, the member attached to the first mounting portion and the sensor can be restrained from interfering with each other.

A method for manufacturing the vehicle seat is a method for manufacturing a vehicle seat with a pressure-receiving member including a first clamping portion, a second clamping portion, and a third clamping portion, and comprises a process in which the duct is positioned on the one side in the lateral direction with respect to the reinforcing wire, and a process in which the sensor is slid in the lateral direction toward the reinforcing wire from the other side in the lateral direction with respect to the reinforcing wire, and engaged with the second clamping portion, the third clamping portion, and the first clamping portion.

Since the sensor is slid in the lateral direction toward the reinforcing wire from a side opposite to a side on which the duct is located in the lateral direction, and engaged with the second clamping portion, the third clamping portion, and the first clamping portion, the sensor and the duct can be restrained from interfering with each other when the sensor is attached.

The vehicle seat may be configured to comprise a seat frame including left and right side frames disposed laterally apart from each other, a pressure-receiving member that supports an occupant and is disposed between the left and right side frames, and a blower attached to the pressure-receiving member, wherein the pressure-receiving member comprises an elastic member, and the blower is attached to the elastic member.

Since the pressure-receiving member comprises an elastic member, and the blower is attached to the elastic member, vibrations caused by the operation of the blower can be restrained.

The pressure-receiving member may be shaped as a plate.

Since the pressure-receiving member is shaped as a plate, the blower can be easily attached to the pressure-receiving member.

The elastic member may be made of elastomer.

Since the elastic member to which the blower is attached is made of elastomer, vibrations caused by the operation of the blower can be effectively restrained.

The pressure-receiving member may comprise the elastic member and a wire covered by the elastic member.

The pressure-receiving member may include a mounting portion configured to attach a member other than the blower to the pressure-receiving member, and the blower may be located in a position that does not overlap a position of the mounting portion as viewed from an occupant side.

Since the blower is located in a position that does not overlap the position of the mounting portion as viewed from the occupant side, the blower is less likely to get in the way when the member other than the blower is attached to the mounting portion.

The vehicle seat may be configured to comprise a pad that covers the seat frame and includes an air passage formed therein, and a duct that connects the blower and the air passage, wherein the duct is located in a position that does not overlap the position of the mounting portion as viewed from an occupant side.

Since the duct is located in a position that does not overlap the position of the mounting portion as viewed from the occupant side, the duct is less likely to get in the way when a member other than the blower is attached to the mounting portion.

The vehicle seat may be configured to comprise a pad that covers the seat frame and includes an air passage formed therein, and a duct that connects the blower and the air passage, wherein the blower is located on a side of the pressure-receiving member opposite to an occupant side of the pressure-receiving member, the pressure-receiving member includes a through hole, and the duct extends from a side of the pressure-receiving member opposite to the occupant side of the pressure-receiving member, through the though hole, to the occupant side of the pressure-receiving member.

Since the duct extends from a side of the pressure-receiving member opposite to the occupant side of the pressure-receiving member, through the though hole of the pressure-receiving member, to the occupant side of the pressure-receiving member, the duct can be disposed in a compact manner.

The side frames may be elongate in a direction perpendicular to the lateral direction, and a position of the blower may overlap a position of the through hole in a longitudinal direction of the side frames.

Since the position of the blower overlaps a position of the through hole of the pressure-receiving member in the longitudinal direction of the side frames, the distance from the blower to the through hole can be reduced. In this way, the duct may be made shorter.

The side frames may be elongate in a direction perpendicular to the lateral direction, and the vehicle seat may be configured to further comprise a side frame cover that covers at least a lateral inner side of one end of one of the side frames, wherein a position of the blower is closer, than the side frame cover, to another end of the one of the side frames in the longitudinal direction.

Since the position of the blower is closer, than the side frame cover, to another end of the one of the side frames in the longitudinal direction, the blower can be located away from the side frame cover.

The vehicle seat may be configured to comprise a pad that covers the seat frame and includes an air passage formed therein, and a duct that connects the blower and the air passage, wherein the side frames are elongate in a direction perpendicular to the lateral direction, the vehicle seat further comprises a side frame cover that covers at least a lateral inner side of one end of one of the side frames in a longitudinal direction of the side frames, and a position of a portion at which the duct and the air passage are connected to each other is located closer, than the side frame cover, to another end of the one of the side frames in the longitudinal direction.

Since the position of the portion at which the duct and the air passage are connected to each other is located closer, than the side frame cover, to another end of the one of the side frames in the longitudinal direction, the portion at which the duct and the air passage are connected to each other can be located away from the side frame cover.

The side frame may be elongate in a direction perpendicular to the lateral direction, and the vehicle seat may be configured to further comprise a side frame cover that covers at least a lateral inner side of one end of one of the side frames in a longitudinal direction of the side frames, wherein a position of the blower overlaps a position of the side frame cover in the longitudinal direction.

Since the position of the blower overlaps a position of the side frame cover in the longitudinal direction, the blower can be located within a width of the side frame cover in the longitudinal direction of the side frames.

The blower may be directly attached to the elastic member.

Since the blower is directly attached to the elastic member, the number of components can be reduced.

### BRIEF DESCRIPTION OF DRAWINGS

[FIG. 1] is a perspective view of a vehicle seat according to a first embodiment.
[FIG. 2] is a perspective view of a seat frame.
[FIG. 3] is a perspective view of a first pressure-receiving member.
[FIG. 4] is an illustration of the first pressure-receiving member as viewed from above.
[FIG. 5] is an illustration of the first pressure-receiving member as viewed from the left.
[FIG. 6] is an illustration of a seat cushion frame, the first pressure-receiving member, and a side frame cover as viewed from above.
[FIG. 7] is a perspective view of a blower.
[FIG. 8] is a cross-sectional view showing a mounting structure of the blower.
[FIG. 9] (a) is an illustration of the first pressure-receiving member, the blower, a duct, an ECU, and a sensor as viewed from above, and (b) is an illustration of the first pressure-receiving member, the blower, the duct, the ECU, and the sensor as viewed from below.
[FIG. 10] is a cross-sectional view of the seat cushion.
[FIG. 11] is a perspective view of the vicinity of the sensor mounting portion of the first pressure-receiving member.
[FIG. 12] is a illustration of the vicinity of the sensor mounting portion of the first pressure-receiving member as viewed from above.
[FIG. 13] (a) is a cross-sectional view taken along line A-A of FIG. 12, and (b) is a cross-sectional view taken along line B-B of FIG. 12.
[FIG. 14] (a) and (b) are cross-sectional views of the blower mounting structure according to a modification of the first embodiment.
[FIG. 15] is an illustration of a seat cushion frame, a first pressure-receiving member, and a side cover frame of a vehicle seat according to a second embodiment as viewed from above.
[FIG. 16] (a) is an illustration of the pressure-receiving member, the blower, the duct, the ECU, and the sensor as viewed from above, and (b) is an illustration of the pressure-receiving member, the blower, the duct, the ECU, and the sensor as viewed from below.
[FIG. 17] (a) is an illustration of the first pressure-receiving member of the vehicle seat according to a first modification as viewed from below, and (b) is a cross-sectional view taken along line C-C of FIG. 17(a).
[FIG. 18] (a) is an illustration of the first pressure-receiving member of the vehicle seat according to a second modification as viewed from below, and (b) is a cross-sectional view taken along line D-D of FIG. 18(a).
[FIG. 19] is an illustration of a seat cushion of a car seat according to a third modification as viewed from above.
[FIG. 20] (a) is an illustration of a seat cushion of a car seat according to a fourth modification as viewed from above, and (b) is an illustration of a seat cushion of a car seat according to a fifth modification as viewed from above.
[FIG. 21] (a) is an illustration of a seat cushion of a car seat according to a sixth modification as viewed from above, and (b) is an illustration of a seat cushion of a car seat according to a seventh modification as viewed from above.
[FIG. 22] is an illustration of a seat cushion of a car seat according to an eighth modification as viewed from above.
[FIG. 23] (a) is an illustration of a seat cushion of a car seat according to a ninth modification as viewed from above, and (b) is a perspective view of the ECU, a moving mechanism, and a support member.
[FIG. 24] is an illustration of a seat cushion of a car seat according to a tenth modification as viewed from above.
[FIG. 25] is an illustration of a seat cushion frame and a first pressure-receiving member of a car seat according to a third embodiment as viewed from above.
[FIG. 26] is an illustration of the seat cushion frame, the first pressure-receiving member, and an air passage of a seat cushion pad as viewed from above.
[FIG. 27] (a) is a cross-sectional view of the seat cushion pad, a back cover, and a duct as viewed from the left, and (b) is a cross-sectional view of the seat cushion.
[FIG. 28] is an illustration of the seat cushion as viewed from above.

### DESCRIPTION OF EMBODIMENTS

Next, a first embodiment will be described. In this description, the front/rear (frontward/rearward), left/right (leftward/rightward; lateral), and up/down (upward/downward) directions are designated with reference to the front/rear, left/right and up/down directions for a person seated on a seat (occupant).

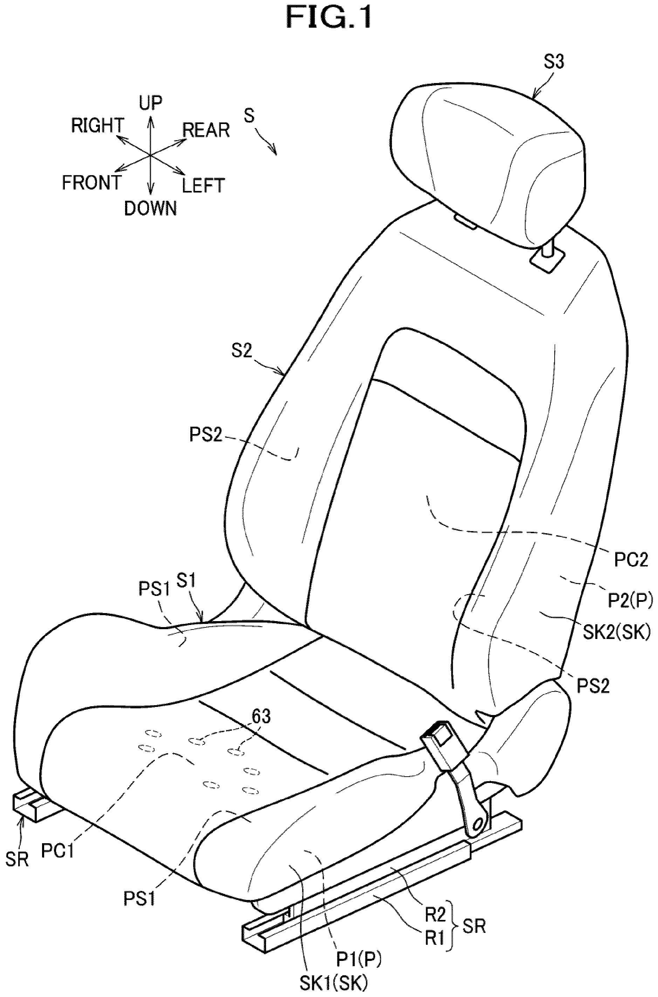

As shown in FIG. 1, a vehicle seat according to this embodiment is configured as a car seat S to be installed in an automobile as a vehicle. The car seat S comprises a seat cushion S1, a seat back S2, and a headrest S3.

The car seat S further comprises a moving mechanism SR that allows the seat cushion S1 to move with respect to a floor of the automobile. The moving mechanism SR comprises left and right lower rails R1 that are fixed to the floor of the automobile, and left and right upper rails R2 that are engaged with the lower rails R1 in a manner that allow the upper rails R2 to slide in a front-rear direction. The seat cushion S1 is fixed to the left and right upper rails R2. As a result, the seat cushion S1 (car seat S) is slidable in the front-rear direction with respect to the floor of the automobile.

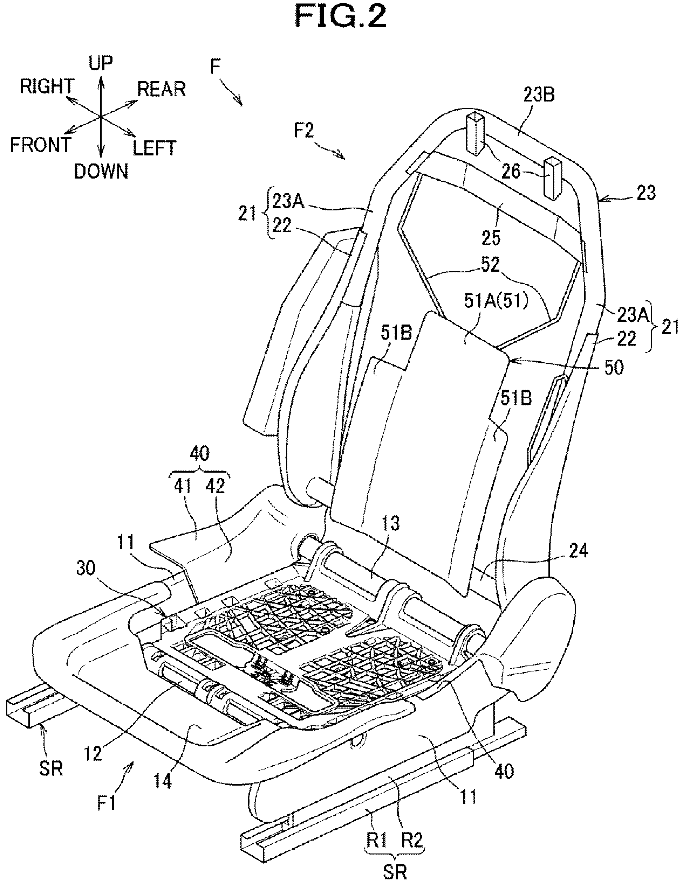

As shown in FIG. 1 and FIG. 2, the car seat S comprises a seat frame F, a pad P that covers the seat frame F, and an outer covering SK that covers the seat frame F and the pad P.

The seat frame F comprises a seat cushion frame F1 that is a frame of the seat cushion S1, and a seat back frame F2 that is a frame of the seat back S2.

The pad P is, for example, made of foamed plastic such as urethane foam, and includes a seat cushion pad P1 that covers the seat cushion frame F1 and a seat back pad P2 that covers the seat back frame F2. The seat cushion pad P1 has a first central portion PC1 and left and right first side portions PS1 that are provided on the left and right sides of the first central portion PC1 and project further upward of the first central portion PC1. The seat back pad P2 has a second central portion PC2 and second side portions PS2 that are provided on the left and right sides of the second central portion PC2 and project further frontward of the second central portion PC2.

The outer covering SK is, for example, made of leather, fabric, etc., and includes a seat cushion outer covering SK1 covering the seat cushion frame F1 and the seat cushion pad P1, and a seat back outer covering SK2 covering the seat back frame F2 and the seat back pad P2.

As shown in FIG. 2, the seat cushion S1 comprises the seat cushion frame F1, a first pressure-receiving member 30 as a pressure-receiving member, and left and right side frame covers 40. The seat cushion S1 is formed by covering the seat cushion frame F1, the first pressure-receiving member 30, and the side frame covers 40 with the seat cushion pad P1 and the seat cushion outer covering SK1. The seat cushion pad P1 covers the seat cushion frame F1, the first pressure-receiving member 30, and the side frame covers 40.

The seat cushion frame F1 comprises first side frames 11 as left and right side frames, a front frame 12 and a rear frame 13 as a pair of connecting frames, and a pan frame 14.

The first side frames 11 are each made of sheet metal and formed in a shape elongate in the front-rear direction perpendicular to the lateral direction. In the embodiment, the front-rear direction corresponds to "a longitudinal direction of the side frame" and "the first direction". The left and right side frames 11 are disposed apart from each other in the lateral direction.

The front frame 12 and the rear frame 13 connect the left and right first side frames 11. More specifically, the front frame 12 is made of a metal pipe and connects front portions of the left and right first side frames 11. The rear frame 13 is made of a metal pipe and connects rear portions of the left and right first side frames 11. The front frame 12 and the rear frame 12 are disposed apart from each other in the front-rear direction.

The pan frame 14 is made of sheet metal and connects front portions of the left and right first side frames 11.

The seat back S2 comprises the seat back frame F2 and a second pressure-receiving member 50. The seat back S2 is formed by covering the seat back frame F2 and the second pressure-receiving member 50 with the seat back pad P2 and the seat back outer covering SK2. The seat back pad P2 covers the seat back frame F2 and the second pressure-receiving member 50.

The seat back frame F2 comprises left and right lower side frames 22, a pipe frame 23, a lower frame24, and a bridging frame 25.

The lower side frames 22 are each made of sheet metal and formed in a shape elongate in the up-down direction perpendicular to the lateral direction. The pipe frame 23 is made of a metal pipe and includes left and right upper side frames 23A and an upper frame 23B extending in the lateral direction to connect upper ends of the upper frames 23A.

The upper side frames 23A are connected to upper portions of the lower side frames 22 and, together with the lower side frames 22, form second side frames 21 that are left and right frames of the seat back frame F2. The left and right second side frames 21 are formed in a shape elongate in the up-down direction and are disposed apart from each other in the lateral direction. A pair of holders 26 configured to hold the headrest S3 is fixed to the upper frame 23B.

The lower frame 24 and the bridging frame 25 connect the left and right second side frames 21. More specifically, the lower frame 24 is made of sheet metal or a metal pipe and connects lower portions of the left and right second side frames 21. The bridging frame 25 is made of sheet metal and is configured to connect upper portions of the left and right second side frames 21. The bridging frame 25 is disposed below the upper frame 23B. The lower frame 24 and the bridging frame 25 are disposed apart from each other in the up-down direction.

The second pressure-receiving member 50 is a plate-shaped member configured to support the occupant and is disposed between the left and right second side frames 21. The second pressure-receiving member 50 comprises a plastic member 51 and a mounting wire 52.

The mounting wire 52 is a metal wire that reinforces the plastic member 51 and is partly covered by the plastic member 31. The mounting wire 52 is configured to bridge the lower frame 24 and the bridging frame 25.

The plastic member 51 is a portion that supports the occupant from the rear side and covers a part of the mounting wire 52. The plastic member 51 has a shape of a plate. The plastic member 51 comprises a central support portion 51A and left and right side support portions 51B. The side support portions 51B extend obliquely in a frontward direction from lateral edges of the central support portion 51A in such a manner that the side support portions 51B are positioned further frontward as they extend outward in the lateral direction.

The second pressure-receiving member 50 is mounted to the seat back frame F2 by a lower end of the mounting wire 52 being fixed to the lower frame 24 and an upper end of the mounting wire 52, for example, being inserted into a hole formed in the bridging frame 25.

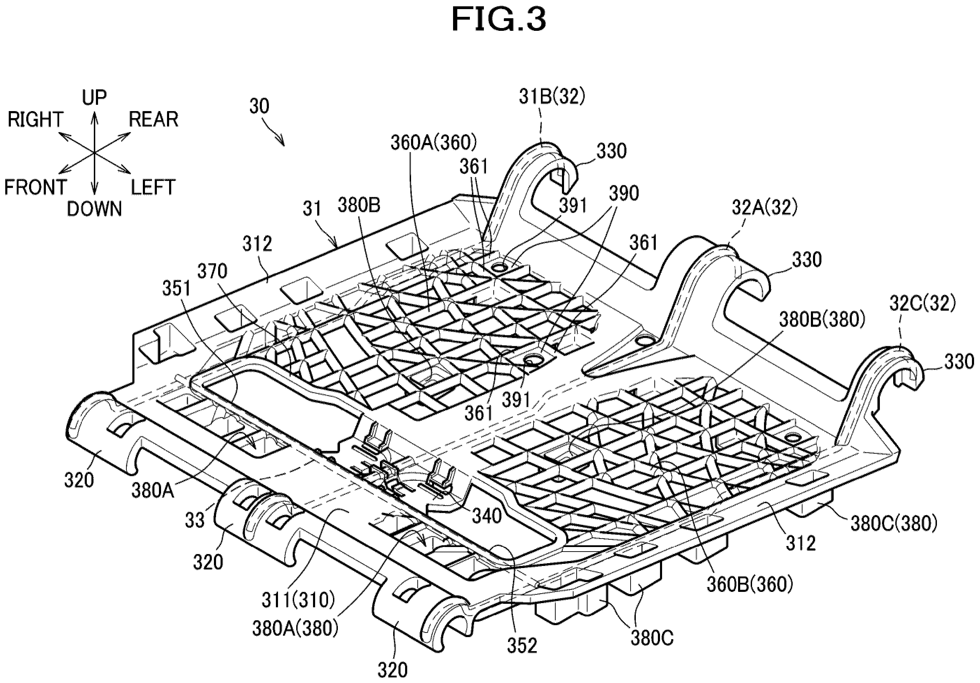

The first pressure-receiving member 30 is a plate-shaped member configured to support the occupant and is disposed between the left and right first side frames 11. As shown in FIG. 3, the first pressure-receiving member 30 comprises a plastic member 31 as an elastic member, and a longitudinal wire 32 and a lateral wire 33 as a wire. In the embodiment, the longitudinal wire 32 corresponds to a "first reinforcing wire" and the lateral wire 33 corresponds to a "second reinforcing wire".

The longitudinal wire 32 and the lateral wire 33 are metal wires that reinforce the plastic member 31, and are covered by the plastic member 31. In other words, the plastic member 31 covers the longitudinal wire 32 and the lateral wire 33.

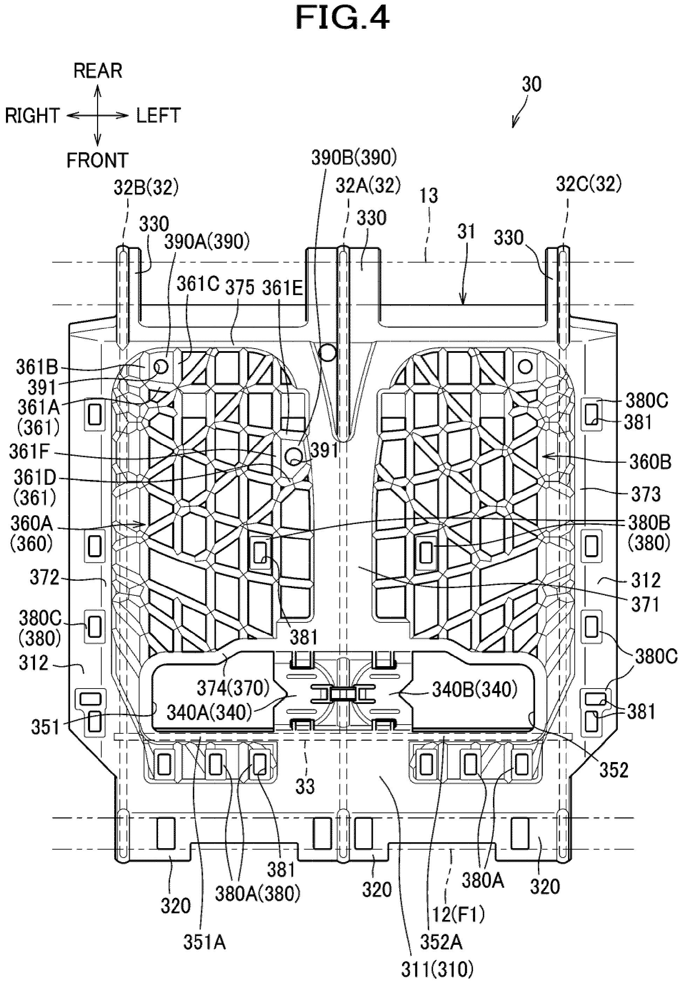

As shown in FIG. 4, the longitudinal wire 32 extends in the front-rear direction as viewed from above. In the embodiment, above corresponds to an "occupant side" and below corresponds to a "side opposite to the occupant side". The longitudinal wire 32 bridges the front frame 12 and the rear frame 13 via the plastic member 31. In the embodiment, the front-rear direction corresponds to a "bridging direction".

The longitudinal wire 32 includes a central wire 32A, a first side wire 32B, and a second side wire 32C.

The central wire 32A is disposed at a central portion of the first pressure-receiving member 30 in the lateral direction. The central wire 32A is disposed between the first side wire 32B and the second side wire 32C. In the embodiment, the central wire 32A corresponds to a "reinforcing wire".

The first side wire 32B is disposed on one side of the central wire 32A in the lateral direction, i.e., the right side of the central wire 32A. The central wire 32A and the first side wire 32B are disposed apart from each other in the lateral direction. In the embodiment, the lateral direction corresponds to a "direction perpendicular to the bridging direction".

The second side wire 32C is disposed on the other side of the central wire 32A in the lateral direction, i.e., the left side of the central wire 32A. The central wire 32A and the second side wire 32C are disposed apart from each other in the lateral direction.

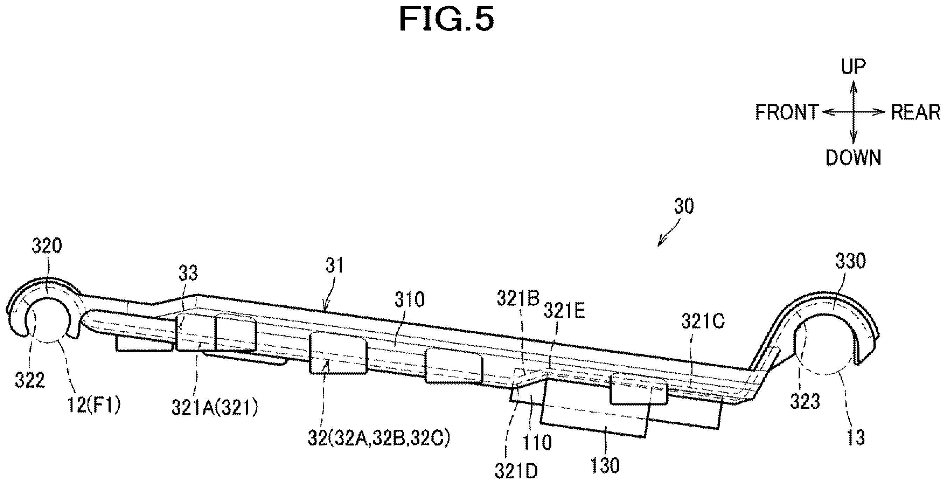

In the embodiment, the central wire 32A, the first side wire 32B, and the second side wire 32C have the same shape. More specifically, as shown in FIG. 5, each of the central wire 32A, the first side wire 32B, and the second side wire 32C has a wire body 321, a front hook 322, and a rear hook 323. The wire body 321 has a first extension portion 321A, a second extension portion 321B, a third extension portion 321C, a first bent portion 321D, and a second bent portion 321E as a bent portion.

The front hook 322 is a portion that engages the front frame 12 via the plastic member 31. The front hook 322 is bent in an arc shape as it extends from a front end of the wire body 321 (first extension portion 321A).

The rear hook 323 is a portion that engages the rear frame 13 via the plastic member 31. The rear hook 323 extends obliquely in a rearward-and-upward direction from a rear end of the wire body 321 (third extension portion 321C), with the rear end bent in an arc shape.

The first extension portion 321A extends in an approximately front-rear direction. More specifically, the first extension portion 321A extends obliquely in a rearward-and-downward direction. The second extension portion 321B extends obliquely in a rearward-and-upward direction from a rear end of the first extension portion 321A. The first bent portion 321D is formed between the first extension portion 321A and the second extension portion 321B. The third extension portion 321C extends obliquely in the rearward-and-downward direction from a rear end of the second extension portion 321B. The third extension portion 321C extends approximately parallel to the first extension portion 321A. The second bent portion 321E is formed between the second extension portion 321B and the third extension portion 321C.

As shown in FIG. 4, the lateral wire 33 extends in a direction perpendicular to the longitudinal wire 32 as viewed from above. More specifically, the lateral wire 33 extends in the lateral direction as viewed from above. The lateral wire 33 crosses the longitudinal wire 32 as viewed from above. The second reinforcing wire is arranged above the first extension portion 321A of the longitudinal wire 32 (refer to FIG. 5) and over the first side wire 32B, the central wire 32A, and the second side wire 32C. The lateral wire 33 also extends along a part of an edge of each through holes 351 and 352 provided in the plastic member 31. More specifically, the lateral wire 33 extends along front edges 351A and 352A of the through holes 351 and 352.

The plastic member 31 has a shape of a plate. The plastic member 31 includes a body portion 310, a front hook portion 320, and a rear hook portion 330.

The front hook portion 320 is a portion configured to be hooked to the front frame 12 and covers the front hook 322 of the longitudinal wire 32 (refer to FIG. 5).

The rear hook portion 330 is a portion configured to be hooked to the rear frame 13 and covers the rear hook 323 of the longitudinal wire 32 (refer to FIG. 5).

The first pressure-receiving member 30 is mounted to the sheet cushion frame F1 by hooking the front hook portion 320 onto the front frame 12 and hooking the rear hook portion 330 onto the rear frame 13.

The body portion 310 is a portion that supports the occupant from below and covers the wire body 321 of the longitudinal wire 32 (refer to FIG. 5) and the lateral wire 33. The body portion 310 includes a central support portion 311 and left and right side support portions 312. The side support portions 312 extend obliquely in an upward direction from lateral edges of the central support portion 311 in such a manner that the side support portions 312 are positioned upward as they extend outward in the lateral direction (refer also to FIG. 3). Each of the side support portions 312 has a shape of a plate.

The plastic member 31 comprises a sensor mounting portion 340, through holes 351 and 352, a mesh portion 360, a frame portion 370, and a mounting portion 380.

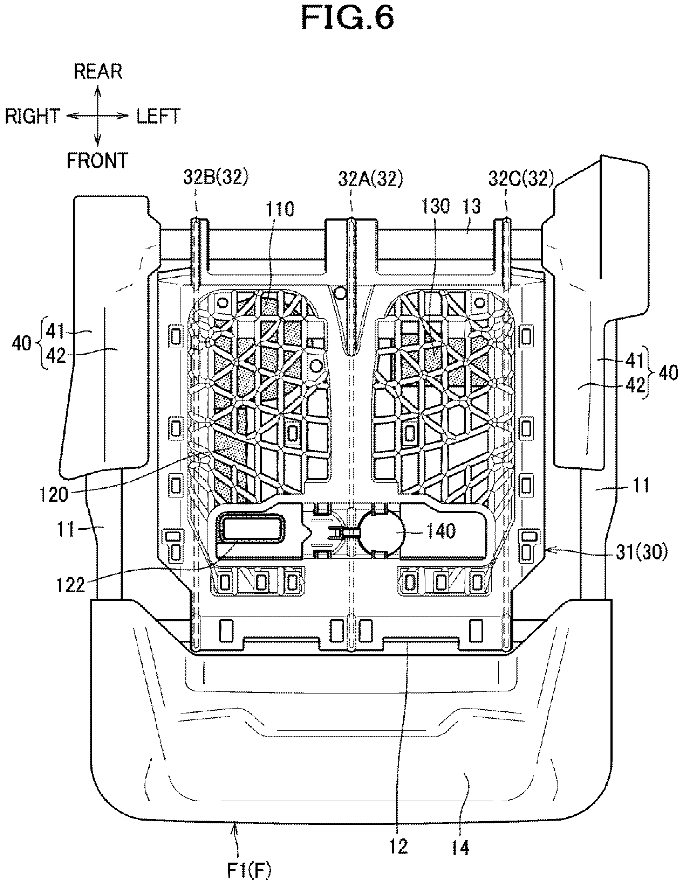

The sensor mounting portion 340 is a portion to which a sensor 140 is mounted (refer to FIG. 6), and is provided on a front portion of the central support portion 311. The sensor mounting portion 340 is provided on the central portion of the first pressure-receiving member 30 in the lateral direction.

The sensor mounting portion 340 includes a first sensor mounting portion 340A and a second sensor mounting portion 340B. The first sensor mounting portion 340A and the second sensor mounting portion 340B both allow the sensor 140 to be mounted thereto. The first sensor mounting portion 340A is located on the right side, which is one side in the lateral direction, of the central wire 32A and adjacent to the central wire 32A. The second sensor mounting portion 340B is located on the left side, which is the other side in the lateral direction, of the central wire 32A and adjacent to the central wire 32A.

The through holes 351 and 352 are through holes extending in the up-down direction and are provided on the left and right sides of the sensor mounting portion 340. More specifically, the through hole 351 is provided on the right side of the sensor mounting portion 340 and the through hole 352 is provided on the left side of the sensor mounting portion 340. In addition, the through hole 351 is provided on the right side of the first sensor mounting portion 340A and adjacent to the first sensor mounting portion 340A. The through hole 352 is provided on the left side of the second sensor mounting portion 340B and adjacent to the second sensor mounting portion 340B. In the embodiment, the through hole 351 corresponds to a "first hole" and the through hole 352 corresponds to a "second hole". The through holes 351 and 352 allow the duct 120 (refer to FIG. 6) to pass therethrough.

The mesh portion 360 is a portion forming a web shape and is provided in the central support portion 311. The mesh portion 360 includes a first mesh portion 360A provided on the right side of the central portion of the first pressure-receiving member 30 in the lateral direction, and a second mesh portion 360B provided on the left side of the central portion of the first pressure-receiving member 30 in the lateral direction. The first mesh portion 360A is provided on the rear side of the through hole 351 and the second mesh portion 360B is provided on the rear side of the through hole 352.

The frame portion 370 is a portion having a shape of a frame provided to surround the mesh portion 360. The frame portion 370 comprises a first frame portion 371, a second frame portion 372, a third frame portion 373, a fourth frame portion 374, and a fifth frame portion 375.

The first frame portion 371 is a portion positioned between the first mesh portion 360A and the second mesh portion 360B and extends in the front-rear direction. The first frame portion 371 covers the wire body 321 of the central wire 32A.

The second frame portion 372 is a portion on the right side of the first mesh portion 360A and extends in the front-rear direction. The second frame portion 372 covers the wire body 321 of the first side wire 32B.

The third frame portion 373 is a portion on the left side of the second mesh portion 360B and extends in the front-rear direction. The third frame portion 373 covers the wire body 321 of the second side wire 32C.

The fourth frame portion 374 is a portion on the front side of the mesh portion 360 (360A, 360B). The fourth frame portion 374 extends in the lateral direction and connects front ends of the first frame portion 371, the second frame portion 372, and the third frame portion 373. The fourth frame portion 374 forms the rear edges of the through holes 351 and 352.

The fifth frame portion 375 is a portion positioned on the rear side of the mesh portion 360 (360A, 360B). The fifth frame portion 375 is a portion extending in the lateral direction and configured to connect rear ends of the first frame portion 371, the second frame portion 372, and the third frame portion 373.

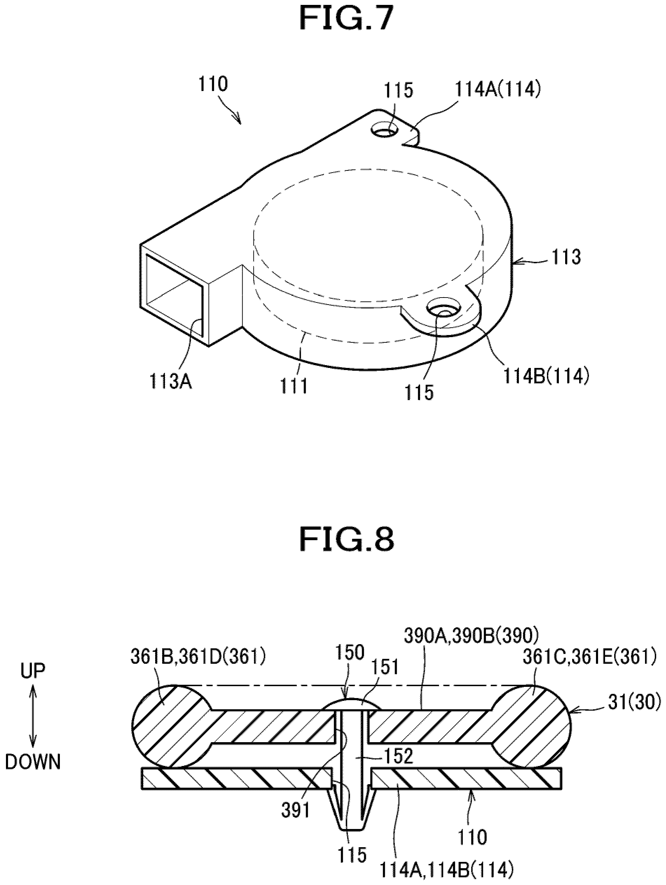

The mounting portion 380 is a portion for attaching another member to the first pressure-receiving member 30. Specifically, the mounting portion 380 is a portion for mounting a member other than a blower 110 (refer to FIG. 7) to the first pressure-receiving member 30. The mounting portion 380 has a bottomed cylindrical shape opening upward (refer to FIG. 3), and has a mounting hole 381 extending through a plate-shaped bottom wall in the up-down direction. The member other than the blower 110 may be, for example, a harness, a connector, or other members. For example, the harness may be mounted to the mounting portion 380 via a harness clip.

The mounting portion 380 includes first mounting portions 380A, second mounting portions 380B, and third mounting portions 380C.

The first mounting portions 380A and the second mounting portions 380B are provided in the central support portion 311. More specifically, the first mounting portions 380A are provided in a front end portion of the central support portion 311, and the second mounting portions 380B are provided in a central portion of the central support portion 311.

The first mounting portions 380A are provided in the front end portion of the central support portion 311 at a position frontward of the through holes 351, 352, with three first mounting portions 380A laterally aligned in front of the through hole 351 and three first mounting portions 380A laterally aligned in front of the through hole 352. The second mounting portions 380B are provided at a position rearward of the through holes 351, 352, with one second mounting portion 380B positioned rearward of the through hole 351 and one second mounting portion 380B positioned rearward of the through hole 352. The second mounting portions 380B are provided inside meshes of the mesh portion 360 to block the meshes.

The third mounting portions 380C are provided on the left and right side support portions 312. Four third mounting portions 380C aligned in the front-rear direction are provided on each of the side support portions 312. The third mounting portions 350C that are located frontmost comprise two mounting holes 381.

The plastic member 31 has elasticity. The plastic member 31 (elastic member) is made of an elastic material. More specifically, the plastic member 31 is made of elastic plastic. In the embodiment, the plastic member 31 is made of elastomer. For example, the elastomer may be polyurethane thermoplastic elastomer, polyethylene thermoplastic elastomer, polystyrene thermoplastic elastomer, or polyolefin thermoplastic elastomer. The first pressure-receiving member 30 is integrally molded by insert molding or other molding methods with the plastic member 31 covering the longitudinal wire 32 and the lateral wire 33.

As shown in FIG. 6, the side frame covers 40 are members that cover rear end portions of the first side frames 11. The side frame covers 40 are made of plastic. The side frame covers 40 each include an upper cover 41 and a side cover 42 formed in one piece. In the embodiment, a rear end portion of each of the first side frames 11 corresponds to "one end of the side frame in the longitudinal direction" and a front end portion of each of the first side frames 11 corresponds to "the other end of the side frame in the longitudinal direction".

The upper covers 41 are portions that cover upper sides of the rear end portions of the first side frames 11.

The side covers 42 are portions that cover lateral inner sides of the rear end portions of the first side frames 11, and extend downward from lateral inner edges of the upper covers 41. More specifically, the side covers 42 extend obliquely downward in such a manner that lateral inner sides of the side covers 42 are located downward than lateral outer sides of the side covers 42 (also refer to FIG. 2).

The car seat S further comprises a blower 110, a duct 120, an ECU 130 as a controller, and a sensor 140. The blower 110 is, for example, a sirocco fan. The ECU 130 is an electronic control unit for controlling the blower 110 and comprises a central processing unit (CPU), a random-access memory (RAM), a read-only memory (ROM), an input/output circuit, and other components. The sensor 140 is a sensor for detecting an occupant seated on the car seat S. The sensor 140 is capable of acquiring biometric information of the occupant. As one example, the sensor 140 is a pressure sensor that detects a load from the occupant.

The blower 110 is disposed below the first pressure-receiving member 30. The blower 110 is mounted to the first pressure-receiving member 30. In other words, the blower 110 is mounted to an under surface of the first pressure-receiving member 30 which is a surface opposite to an occupant side of the first pressure-receiving member 30. The blower 110 is mounted to the plastic member 31 of the first pressure-receiving member 30. In the embodiment, the blower 110 is mounted directly on the plastic member 30 without the use of brackets or other components. The blower 110 is supported by the seat frame F via the plastic member 31 (the first pressure-receiving member 30). In other words, the blower 110 is not directly supported by the seat frame F.

As shown in FIG. 7, the blower 110 comprises an impeller 111, a motor capable of rotating the impeller, a casing 113 accommodating the impeller 111 and the motor, and two to-be-mounted portions 114. The to-be-mounted portions 114 are plate-shaped portions protruding from the casing 113, and have second through holes 115 to which engaging portions 152 of mounting members 150 (refer to FIG. 8) are engaged to.

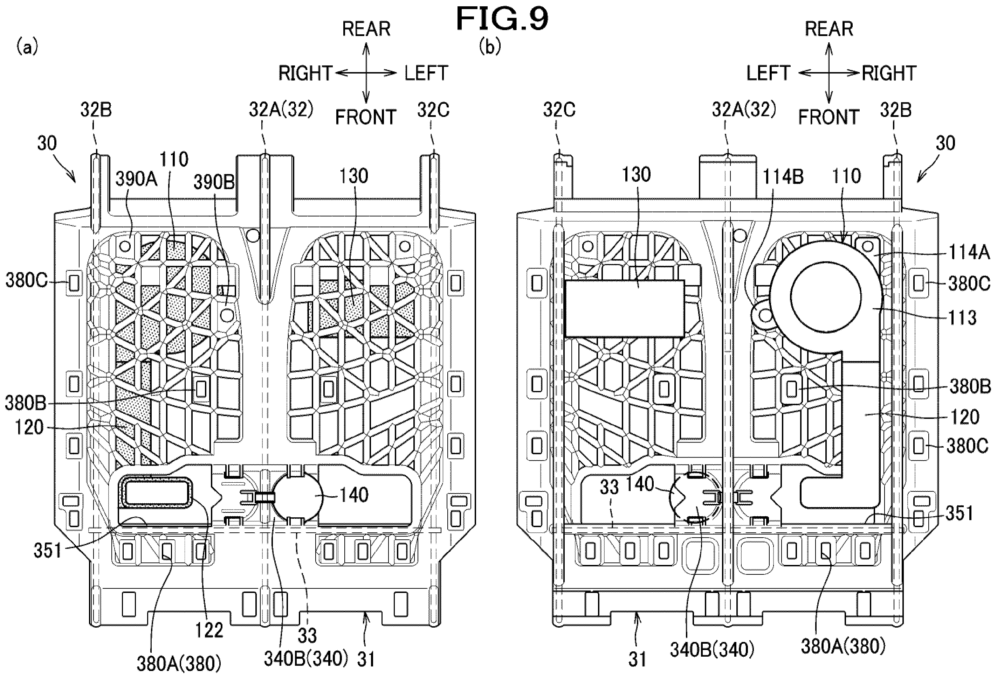

In the embodiment, the to-be-mounted portions 114 include a first to-be-mounted portion 114A and a second to-be-mounted portion 114B. The first to-be-mounted portion 114A extends from the casing 113 in a direction away from an outlet 113A. The second to-be-mounted portion 114B extends from the casing 113 in a direction different from the direction in which the first to-be-mounted portion 114A extends. More specifically, the first to-be-mounted portion 114A extends rearward from the casing 113 and the second to-be-mounted portion 114B extends leftward (toward the center of the first pressure-receiving member 30 in the lateral direction) from the casing 113 (also refer to FIG. 9(b)).

As shown in FIG. 8, the car seat S further comprises a mounting member 150. The mounting member 150 is a member configured to mount the blower 110 to the first pressure-receiving member 30. The mounting member 150 is, for example, a clip and comprises a head portion 151 and an engaging portion 152.

The first pressure-receiving-member 30 comprises a blower mounting portion 390 having a shape of a plate. The blower mounting portion 390 is a portion for mounting the blower 110 to the first pressure-receiving member 30. The blower mounting portion 390 comprises a first through hole 391 extending through the blower mounting portion 390 in the up-down direction. The first through hole 391 is a hole to which the engaging portion 152 of the mounting member 150 is engaged to mount the blower 110 to the first pressure-receiving member 30.

As shown in FIG. 4, the blower mounting portion 390 is provided on the right side of the central portion of the first pressure-receiving member 30 in the lateral direction. More specifically, the blower mounting portion 390 is provided inside a mesh of the mesh portion 360A located on the right side of the central portion of the first pressure-receiving member 30 in the lateral direction to block the mesh.

The blower mounting portion 390 includes a first blower mounting portion 390A and a second blower mounting portion 390B. The first blower mounting portion 390A is provided in a right edge (an edge of the first mesh portion 360A far from the central portion of the first pressure-receiving member 30 in the lateral direction) of the rear end of the first mesh portion 360A. The second blower mounting portion 390B is provided in a rear portion of a left edge portion of the first mesh portion 360A (an edge of the first mesh portion 360A close to the central portion of the pressure-receiving member 30 in the lateral direction). The second blower mounting portion 390B is provided frontward of the first blower mounting portion 390A.

The blower mounting portion 390 is provided in contact with the frame portion 370. More specifically, the first blower mounting portion 390A is provided such that the rear end of the first blower mounting portion 390A contacts the fifth frame portion 375 of the frame portion 370. The second mounting portion 390B is provided such that a left edge thereof (an edge of the second blower mounting portion 390B close to the central portion of the first pressure-receiving member 30 in the lateral direction) contacts the first frame portion 371 of the frame portion 370. The first frame portion 371 protrudes further upward than the second blower mounting portion 390B. The first frame portion 371 also protrudes further downward than the second blower mounting portion 390B. The fifth frame portion 375 protrudes further upward than the first blower mounting portion 390A. The fifth frame portion 375 also protrudes further downward than the first blower mounting portion 390A.

A thick portion 361 is provided around the blower mounting portion 390. In the first embodiment, the thick portion 361 is a strand of the first mesh portion 360A. The thick portion 361 is provided in contact with the blower mounting portion 390. More specifically, the thick portion 361 is provided in contact with a front edge and left and right edges of the first blower mounting portion 390A. The thick portion 361 is also provided in contact with front and rear edges and a right edge of the second blower mounting portion 390B. The thick portion 361 protrudes further upward than the blower mounting portion 390. The thick portion 361 also protrudes further downward than the blower mounting portion 390. The thick portion 361 includes thick portions 361A to 361F.

The thick portion 361A contacts the front edge of the first blower mounting portion 390A, the thick portion 361B contacts the right edge of the first blower mounting portion 390A, and the thick portion 361C contacts the left edge of the first blower mounting portion 390A. The first blower mounting portion 390A is located between the thick portion 361B and the thick portion 391C. The thick portions 361A, 361B, and 361C protrude further upward than the first blower mounting portion 390A. The thick portions 361A, 361B, and 361C also protrude further downward than the first blower mounting portion 390A.

The thick portion 361D contacts the front edge of the second blower mounting portion 390B, the thick portion 361E contacts the rear edge of the second blower mounting portion 390B, and the thick portion 361F contacts the right edge of the second blower mounting portion 390B. The second blower mounting portion 390B is located between the thick portion 361D and the thick portion 361E. The thick portions 361D, 361E, and 361F protrude further upward than the second blower mounting portion 390B. The thick portions 361D, 361E, and 361F also protrude further downward than the second blower mounting portion 390B.

As shown in FIG. 8, the engaging portion 152 of the mounting member 150 passes through and is engaged with the first through hole 391 of the blower mounting portion 390 provided on the first pressure-receiving member 30 and the second through hole 115 of the to-be-mounted portion 114 provided on the blower 110 from the top to the bottom. An end portion of the engaging portion 152 protrudes further downward than the blower mounting portion 390.

The thick portion 361 (361A to 361G) protrudes further upward than the mounting member 150. More specifically, the thick portion 361 protrudes further upward than the head 151 of the engaging member 150. In other words, the head 151 of the engaging member 150 does not protrude further upward than the thick portion 361 (refer to the chain dotted line).

The first to-be-mounted portion 114A of the blower 110 is disposed below the first blower mounting portion 390A and contacts the thick portions 361B and 361C. Here, one of the thick portions 361B and 361C corresponds to a "first thick portion" and the other of the thick portions 361B and 361C corresponds to a "second thick portion".

The second to-be-mounted portion 114B of the blower 110 is disposed below the second blower mounting portion 390B and contacts the thick portions 361D and 361E. Here, one of the thick portions 361D and 361E corresponds to the "first thick portion" and the other of the thick portions 361D and 361E corresponds to the "second thick portion".

As shown in FIGS. 9(a) and 9(b), the blower 110 is disposed in a position that does not overlap a position of the mounting portion 380 as viewed from above. More specifically, the blower 110 is disposed in a position that does not overlap positions of any of the first mounting portions 380A, the second mounting portions 380B, and the third mounting portions 380C as viewed from above.

The blower 110 is disposed in a position that does not overlap a position of the longitudinal wire 32 as viewed from above. More specifically, the blower 110 is disposed in a position that does not overlap positions of any of the central wire 32A, the first side wire 32B, and the second side wire 32C as viewed from above. The blower 110 is also disposed in a position that does not overlap a position of the lateral wire 33 as viewed from above.

The blower 110 is disposed on the right side of the central wire 32A. More specifically, the blower 110 is disposed between the central wire 32A and the first side wire 32B as viewed from above. In the embodiment, one of the central wire 32A and the first side wire 32B corresponds to a "first wire" and the other one of the central 32A wire and the first side wire 32B corresponds to a "second wire".

As shown in FIG. 5, a position of the blower 110 in the front-rear direction overlaps positions of the first bent portion 321D and the second bent portion 321E of the longitudinal wire 32 in the front-rear direction. The blower 110 is also disposed in a position that overlaps positions of the first bent portion 321D and the second bent portion 321E of the longitudinal wire 32 as viewed in the lateral direction. The blower 110 is disposed in a position between the bent portions 321D and 321E of the central wire 32A and the bent portions 321D and 321E of the first side wire 32B.

As shown in FIG. 6, a position of the blower 110 in the front-rear direction overlaps a position of the side frame covers 40 in the front-rear direction. More specifically, the blower 110 is disposed rearward of the front ends of the side frame covers 40 and frontward of the rear ends of the side frame covers 40 as viewed from above. In the first embodiment, the blower 110 is disposed between the left and right side frame covers 40 as viewed from above.

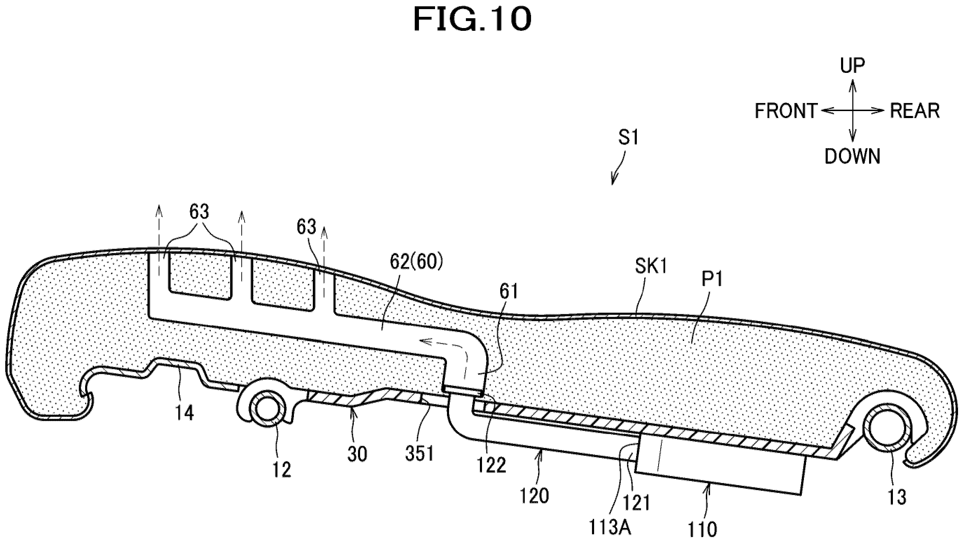

As shown in FIG. 10, the duct 120 is a tube-shaped member that connects the blower 110 and an air passage 60 provided in the seat cushion pad P1. The seat cushion pad P1 includes the air passage 60 which is formed therein. The air passage 60, for example, includes a first air passage 61, a second air passage 62, and a plurality of third air passages 63. The first air passage 61 is configured to communicate the second air passage 62 with a space below the seat cushion pad P1. The third air passage 63 is configured to communicate the second air passage 62 with a space above the seat cushion pad P1.

The duct 120 is configured such that a first end portion 121 that is one end portion of the duct 120 is connected with the outlet 113A of the blower 110 and a second end portion 122 that is the other end portion of the duct 120 is connected with the first air passage 61 of the air passage 60. The seat cushion S1 is configured such that air delivered from the blower 110 passes through the duct 120 and the air passage 60 and is blown out from the top surface of the cushion pad P1 toward the occupant.

The duct 120 has an L-shape and extends frontward from the blower 110 and is then bent to extend upward, as viewed from the lateral direction. The duct 120 extends from the lower side of the first pressure-receiving member 30, through the through hole 351, to the upper side of the first pressure-receiving member 30.

As shown in FIGS. 9(a) and 9(b), the duct 120 is disposed in a position that does not overlap a position of the mounting portion 380 as viewed from above. More specifically, the duct 120 is disposed in a position that does not overlap the positions of any of the first mounting portions 380A, the second mounting portions 380B, and the third mounting portions 380C, as viewed from above. The first mounting portions 380A are located frontward of the duct 120 and the sensor 140. The duct 120 is disposed on the right side of the central wire 32A. The duct 120 is disposed on the right side of the central portion of the first pressure-receiving member 30 in the lateral direction.

The second end portion 122 of the duct 120 that is a portion at which the duct 120 and the air passage 60 are connected to each other (refer to FIG. 10 for details) is located in a position that overlaps a position of the sensor 140 in the front-rear direction. More specifically, the second end portion 122 of the duct 120 and the sensor 140 are aligned side-by-side in the lateral direction as viewed from above. The second end portion 122 of the duct 120 is disposed on the right side of the sensor 140.

The second end portion 122 of the duct 120 is disposed on the right side of the central portion of the first pressure-receiving member 30 in the lateral direction. The second end portion 122 of the duct 120 is disposed between the lateral wire 33 and the blower 110 as viewed from above. The second end portion 122 of the duct 120 is disposed in a position closer to the lateral wire 33 than to the blower 110 as viewed from above.

As shown in FIG. 6, the position of the second end portion 122 of the duct 120 in the front-rear direction is closer, than the side frame covers 40, to the front end portions of the first side frames 11. In other words, the second end portion 122 of the duct 120 is disposed frontward of the front ends of the side frame covers 40 as viewed from above.

As shown in FIG. 9(a) and 9(b), the ECU 130 is mounted to the first pressure-receiving member 30. The ECU 130 is disposed in a position that does not overlap a position of the longitudinal wire 32 as viewed from above. More specifically, the ECU 130 is disposed in a position that does not overlap positions of any of the central wire 32A, the first side wire 32B, and the second side wire 32C as viewed from above. The ECU 130 is disposed in a position that does not overlap a position of the lateral wire 33 as viewed from above.

The ECU 130 is disposed on the left side of the central wire 32A. More specifically, the ECU 130 is disposed between the central wire 32A and the second side wire 32C as viewed from above. A position of the ECU 130 in the front-rear direction overlaps a position of the blower 110 in the front-rear direction. In other words, the blower 110 and the ECU 130 are aligned side-by-side in the lateral direction.

As shown in FIG. 5, the position of the ECU 130 in the font-rear direction overlaps a position of the second bent portion 321E of the longitudinal wire 32 in the front-rear direction. The ECU 130 may be disposed in a position that overlaps a position of the second bent portion 321E of the longitudinal wire 32 as viewed in the lateral direction. The ECU 130 may be disposed in a position that overlaps a position of the first bent portion 321D of the longitudinal wire 32 as viewed in the lateral direction.

As shown in FIGS. 9(a) and 9(b), the sensor 140 is mounted to a top surface of the first pressure-receiving member 30 which is the occupant side surface of the first pressure-receiving member 30. More specifically, the sensor 140 is mounted to a top surface of the sensor mounting portion 340. The sensor 140 is disposed on the left side of the central wire 32A. The sensor 140 is disposed on the left side of the central portion of the first pressure-receiving member 30 in the lateral direction. More specifically, the sensor 140 is disposed on a left side portion of the sensor mounting portion 340 with respect to the central portion of the pressure-receiving member 30 in the lateral direction. More specifically, the sensor 140 is mounted to the second sensor mounting portion 340B.

The sensor 140 is disposed in a position that does not overlap a position the blower 110 as viewed from above. The position of the sensor 140 in the lateral direction and the position of the sensor 140 in the front-rear direction both do not overlap a position of the blower 110. More specifically the sensor 140 is disposed in a position frontward of the blower 110 and leftward of the blower 110 as viewed from above. The sensor 140 is disposed in a position obliquely frontward-and-leftward of the blower 110 as viewed from above.

The sensor 140 is disposed in a position that does not overlap a position of the duct 120 as viewed from above. More specifically, the sensor 140 is disposed on the left side of the duct 120 as viewed from above. Moreover, the sensor 140 is disposed on the left side of the second end portion 122 of the duct 120. The duct 120 and the sensor 140 are disposed between the first side wire 32B and the second side wire 32C as viewed from above.

As shown in FIG. 6, the position of the sensor 140 in the front-rear direction is closer, than the side frame covers 40, to the front end portions of the first side frames 11. More specifically, the sensor 140 is disposed frontward of the front ends of the side frame covers 40 as viewed from above.

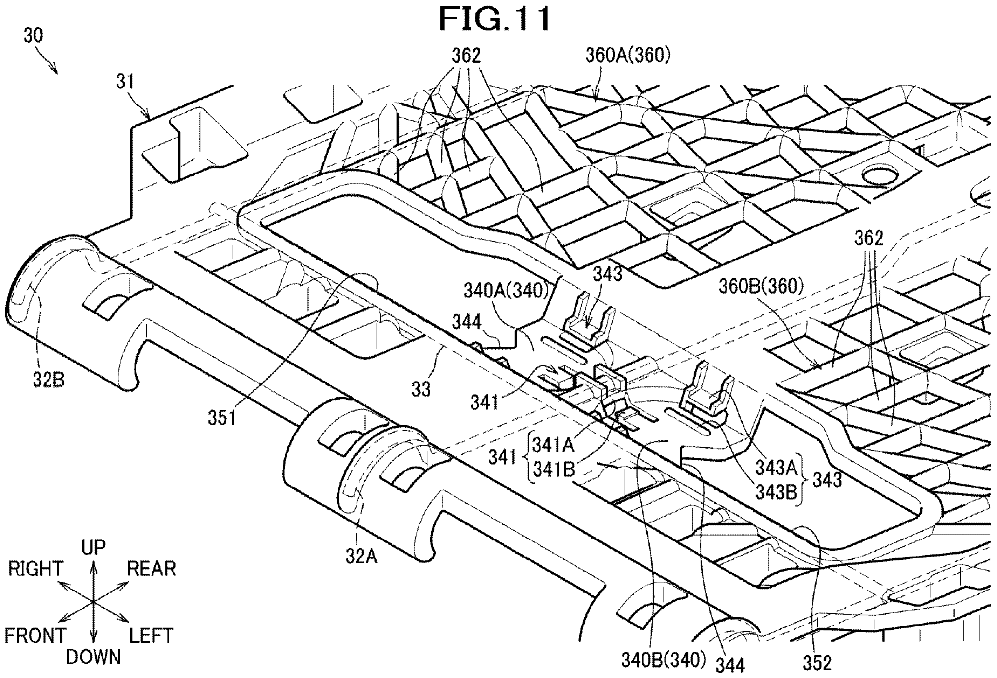

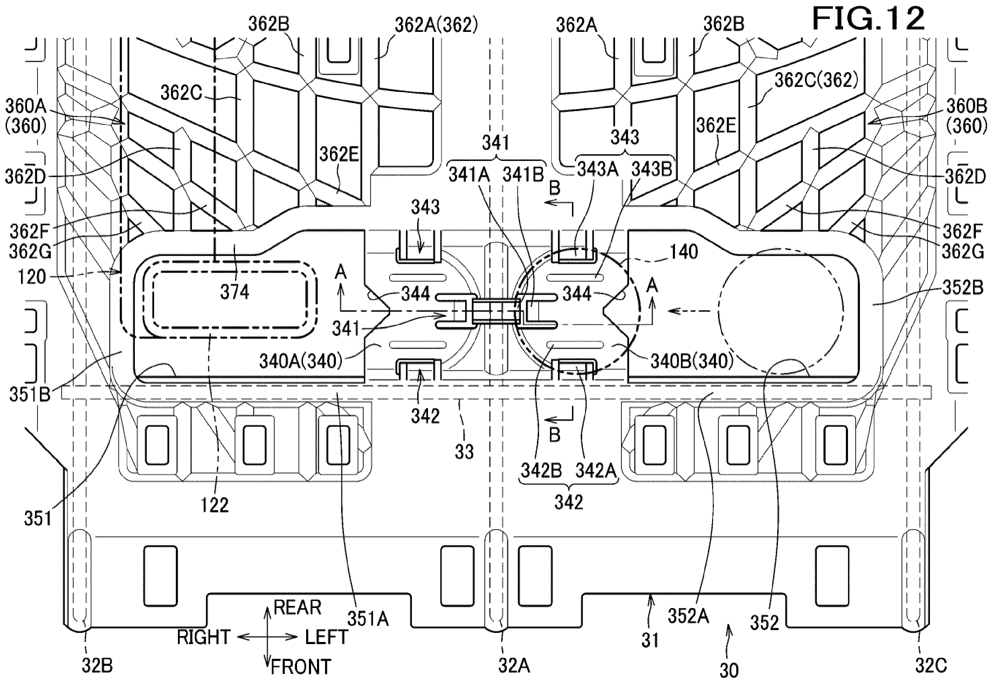

As shown in FIG. 11 and FIG. 12, the first sensor mounting portion 340A and the second sensor mounting portion 340B each includes a first clamping portion 341, a second clamping portion 342, a third clamping portion 343, and a recess 344.

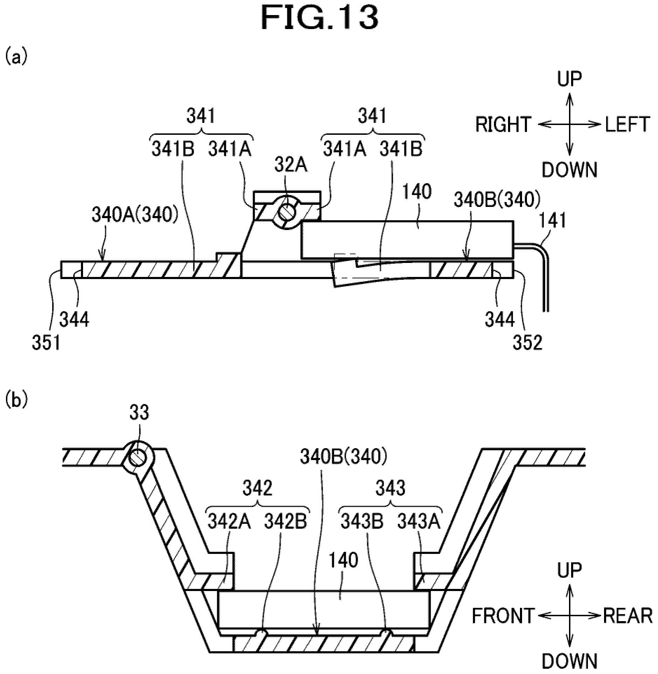

As shown in FIG. 13(a), the first clamping portion 341 clamps the sensor 140 when the sensor 140 is attached to the sensor mounting portion 340. The first clamping portion 341 includes a first contact portion 341A and a second contact portion 341B located below the first contact portion 341A, and holds the sensor 140 between the first contact portion 341A and the second contact portion 341B when the sensor 140 is attached to the sensor mounting portion 340.

A lateral inner end of the second contact portion 341B elastically flexes downward when the sensor 140 is attached. As a result, the second contact portion 341B pushes the sensor 140 from below and causes the sensor 140 to contact the first contact portion 341A.

The car seat S further comprises a harness 141. The harness 141 is electrically connected with the sensor 140. As one example, one end of the harness 141 is electrically connected with the sensor 140, and the other end of the harness 141 (not shown) is electrically connected with the ECU 130 (refer to FIG. 9). The harness 141 extends outward from the sensor 140 toward a side opposite to a side on which the first clamping portion 341 is located in the lateral direction. In the embodiment, the harness 141 extends outward from the sensor 140 toward the left side.

As shown in FIG. 13(b), the second clamping portion 342 and the third clamping portion 343 hold the sensor 140 therebetween when the sensor 140 is attached to the sensor mounting portion 340. The third clamping portion 343 is aligned with the second clamping portion 342 in the front-rear direction. The third clamping portion 343 is located rearward of the second clamping portion 342. The second clamping portion 342 and the third clamping portion 343 have shapes that are approximately symmetrical in the front-rear direction.

The second clamping portion 342 and the third clamping portion 343 respectively include third contact portions 342A and 343A, and fourth contact portions 342B and 343B located below the third contact portions 342A and 343A. The second clamping portion 342 and the third clamping portion 343 hold the sensor 140 between the third contact portions 342A and 343A, and the fourth contact portions 342B and 343B when the sensor 140 is attached to the sensor mounting portion 340.

The fourth contact portions 342B and 343B are protrusions that protrude upward from a bottom of the sensor mounting portion 340 (340A, 340B). As shown in FIG. 12, the fourth contact portions 342B and 343B extend in the lateral direction. The rigidity of sensor mounting portion 340 (340A, 340B) can be increased by including such fourth contact portions 342B and 343B.

The first clamping portion 341 of the first sensor mounting portion 340A is located between a central portion of the first sensor mounting portion 340A and the central wire 32A in the lateral direction. The through hole 351 is located on a side of the central portion of the first sensor mounting portion 340A opposite to a side of the central portion of the first sensor mounting portion 340A on which the first clamping portion 341 is located in the lateral direction. Specifically, the first clamping portion 341 is located on the left side and the through hole 351 is located on the right side, with respect to a lateral central portion of the first sensor mounting portion 340A.

The second clamping portion 342 and the third clamping portion 343 of the first sensor mounting portion 340A is located on the right side of the corresponding first clamping portion 341. The positions of the second clamping portion 342 and the third clamping portion 343 of the first sensor mounting portion 340A overlap the position of the lateral central portion of the first sensor mounting portion 340A in the lateral direction.

The first clamping portion 341 of the second sensor mounting portion 340B is located between a central portion of the second sensor mounting portion 340B and the central wire 32A in the lateral direction. The through hole 352 is located on a side of the central portion of the second sensor mounting portion 340B opposite to a side of the central portion of the second sensor mounting portion 340B on which the first clamping portion 341 is located in the lateral direction. Specifically, the first clamping portion 341 is located on the right side and the through hole 352 is located on the left side, with respect to a lateral central portion of the second sensor mounting portion 340B.

The second clamping portion 342 and the third clamping portion 343 of the second sensor mounting portion 340B is located on the left side of the corresponding first clamping portion 341. The positions of the second clamping portion 342 and the third clamping portion 343 of the second sensor mounting portion 340B overlap the position of the lateral central portion of the second sensor mounting portion 340B in the lateral direction.

The recess 344 has a shape recessed toward the first clamping portion 341 from an edge of the sensor mounting portion 340 (340A, 340B) located opposite to a side of the sensor mounting portion 340 (340A, 340B) on which the first clamping portion 341 is located in the lateral direction. Specifically, the recess 344 of the first sensor mounting portion 340A has a shape recessed from the right edge of the first sensor mounting portion 340A toward the left side on which the corresponding first clamping portion 341 is located. The recess 344 of the second sensor mounting portion 340B has a shape recessed from the left edge of the second sensor mounting portion 340B toward the right side on which the corresponding first clamping portion 341 is located. The recess 344 forms a V-shape as viewed from above.

The recess 344 of the first sensor mounting portion 340A is aligned side-by-side with the corresponding first clamping portion 341 in the lateral direction. The recess 344 of the first sensor mounting portion 340A is located on the right side of the corresponding first clamping portion 341. The position of the recess 344 of the first sensor mounting portion 340A is located between the corresponding second clamping portion 342 and the third clamping portion 343 in the front-rear direction.

The recess 344 of the second sensor mounting portion 340B is aligned with the corresponding first clamping portion 341 in the lateral direction. The recess 344 of the second sensor mounting portion 340B is located on the left side of the corresponding first clamping portion 341. The position of the recess 344 of the second sensor mounting portion 340B is located between the corresponding second clamping portion 342 and the third clamping portion 343 in the front-rear direction.

The edges of the through holes 351 and 352 are thicker than a web portion 362 of the mesh portion 360 (360A, 360B) as viewed from above. The web portion 362 is a portion that forms the mesh of the mesh portion 360. A plurality of web portions 362 are provided. The plurality of web portions 362 extend in the front-rear direction or a direction that crosses the front-rear direction as viewed from above, and form the meshes of the mesh portion 360. The thick portion 361 (refer to FIG. 4) is a part of the web portion 362. The through holes 351 and 352 are configured such that front edges 351A and 352A thereof, outer edges 351B and 352B thereof located on an outer side in the lateral direction, and the fourth frame portion 374 that is a rear edge thereof are thicker than the web portion 362 as viewed from above.

A subset of the plurality of web portions 362 are connected to the edges of the through holes 351 and 352. Specifically, the web portion 362 includes web portions 362A to 362D extending in the front-rear direction and web portions 362E to 362G extending in a manner that intersects the web portions 362A to 362D. The front ends of each of the web portions 362A to 362G are connected to the fourth frame portion 374 that is a rear edge of the through holes 351 and 352.

Next, a method for manufacturing the car seat S of the embodiment will be described. The method for manufacturing the car seat S comprises a duct positioning process and a sensor attaching process.

The duct positioning process is a process in which the duct 120 is positioned on the one side in the lateral direction with respect to the central wire 32A. Specifically, the duct 120 is positioned on the right side of the central wire 32A. The first end portion 121 (refer to FIG. 10) of the duct 120 is connected to the outlet 113A of the blower 110. In the duct positioning process, the duct 120 may be fixed or may not be fixed to the first pressure-receiving member 30.

In the sensor attaching process, the sensor 140 is slid in the lateral direction from the other side in the lateral direction with respect to the central wire 32A toward the central wire 32A, and engaged with the second clamping portion 342, the third clamping portion 343, and the first clamping portion 341. Specifically, the sensor 140 (refer to the thin chain double dotted line) is slid relative to the central wire 32A from the left to the right of the second sensor mounting portion 340B, and engaged with the second clamping portion 342, the third clamping portion 343, and the first clamping portion 341 of the second sensor mounting portion 340B.

Next, the advantageous effects of the car seat S according to the first embodiment will be described.

The duct 120 is located on the right side which is the one side in the lateral direction with respect to the central wire 32A, and the sensor 140 is located on the left side which is the other side in the lateral direction with respect to the central wire 32A; therefore, the duct 120 and the sensor 140 can be restrained from interfering with each other.

The duct 120 is located on the right side with respect to the lateral central portion of the first pressure-receiving member 30, and the sensor 140 is located on the left side with respect to the lateral central portion of the first pressure-receiving member 30; therefore, the duct 120 and the sensor 140 can be restrained from interfering with each other.

The duct 120 and the sensor 140 are located between the first side wire 32B and the second side wire 32C as viewed from above; therefore, the duct 120 and the sensor 140 can be protected by the first side wire 32B and the second side wire 32C.

The first clamping portion 341 of the first sensor mounting portion 340A is located between the central portion of the first sensor mounting portion 340A and the central wire 32A in the lateral direction, and the first clamping portion 341 of the second sensor mounting portion 340B is located between the central portion of the second sensor mounting portion 340B and the central wire 32A in the lateral direction; therefore, the first clamping portions 341 can be located near the central wire 32A. In this way, the rigidity of the first clamping portions 341 can be increased by the central wire 32A.

Each of the first sensor mounting portion 340A and the second sensor mounting portion 340B include the first clamping portion 341, the second clamping portion 342, and the third clamping portion 343; therefore, the sensor 140 can be firmly attached to the first pressure-receiving member 30 when the sensor 140 is attached to the first pressure-receiving member 30.

The through hole 351 is located on a side of the central portion of the first sensor mounting portion 340A opposite to the side of the central portion of the first sensor mounting portion 340A on which the first clamping portion 341 is located in the lateral direction, and the through hole 352 is located on a side of the central portion of the second sensor mounting portion 340B opposite to the side of the central portion of the second sensor mounting portion 340B on which the first clamping portion 341 is located in the lateral direction; therefore, the first clamping portion 341 can be located apart from the duct 120 when the duct 120 extends through the through hole 351 or the through hole 352. In this way, the first clamping portion 341 and the duct 120 can be restrained from interfering with each other.

The harness 141 extends outward from the sensor 140 toward a side opposite to a side on which the first clamping portion 341 is located in the lateral direction; therefore, the harness 141 and the first clamping portion 341 can be restrained from interfering with each other.

Each of the first sensor mounting portion 340A and the second sensor mounting portion 340B has a recess 344; therefore, the harness 141 and the sensor mounting portion 340 (340A, 340B) can be restrained from interfering with each other when the sensor 140, to which the harness 141 is connected, is attached.

The plastic member 31 covering the central wire 32A is made of elastomer; therefore, the comfort of the car seat S can be improved.

The first pressure-receiving member 30 is configured such that the front edges 351A and 352A, the outer edges 351B and 352B, and the rear edge (fourth frame portion 374) of the through holes 351 and 352 are thicker than the web portion 362 of the mesh portion 360 as viewed from above; therefore, the through holes 351 and 352 can be made less susceptible to deformation. In this way, the edges of the through hole 351 and the duct 120 extending through the through hole 351 can be restrained from interfering with each other.

The web portions 362A to 362G of the first pressure-receiving member 30 are connected to the edge (fourth frame portion 374) of the through holes 351 and 352; therefore, the through holes 351 and 352 can further be made less susceptible to deformation. In this way, the edges of the through hole 351 and the duct 120 extending through the through hole 351 can be further restrained from interfering with each other.

The first mounting portion 380A is located frontward of the duct 120 and the sensor 140; therefore, a member attached to the first mounting portion 380A can be restrained from interfering with the duct 120 and the sensor 140.

The sensor 140 is slid in the lateral direction toward the central wire 32A from the side opposite to the side on which the duct 120 is located in the lateral direction, and engaged with the second clamping portion 342, the third clamping portion 343, and the first clamping portion 341; therefore, the sensor 140 and the duct 120 can be restrained from interfering with each other when the sensor 140 is being attached. The duct 120 does not get in the way when the sensor 140 is being attached.

The first pressure-receiving member 30 includes the plastic member 31 having elasticity and the blower 110 is mounted to the plastic member 31; therefore, vibrations caused by the operation of the blower 110 can be restrained.

The first pressure-receiving member 30 has a shape of a plate; therefore, it is easier to mount the blower 110 onto the first pressure-receiving member 30.

The plastic member 31 to which the blower 110 is mounted is made of elastomer; therefore, vibrations caused by the operation of the blower 110 can be efficiently restrained.

The blower 110 is disposed in a position that does not overlap a position of the mounting portion 380 as viewed from above; therefore, the blower 110 is less likely to get in the way when members other than the blower 110, such as harnesses, are being mounted to the mounting portion 380.

The duct 120 is disposed in a position that does not overlap a position of the mounting portion 380 as viewed from above; therefore, the duct 120 is less likely to get in the way when members other than the blower 110, such as harnesses, are being mounted to the mounting portion 380.

The duct 120 extends upward from the lower side of the first pressure-receiving member 30 through the through hole 351 of the first pressure-receiving member 30; therefore, for example, the duct 120 can be disposed in a compact manner compared to an alternative configuration in which a duct extends upward past a forward, rearward, right, or left side of the first pressure-receiving member.

The position of the second end portion 122 of the duct 120 in the front-rear direction is closer, than the side frame covers 40, to the front end portions of the first side frames 11; therefore, the second end portion 122 of the duct 120 can be disposed apart from the side frame covers 40.

The position of the blower 110 overlaps the position of the side frame covers 40 in the front-rear direction; therefore, the blower 110 can be disposed within a length of the side frame covers 40 in the front-rear direction.

The blower 110 is mounted directly on the plastic member 31; therefore, for example, the number of components can be reduced compared to an alternative configuration in which a blower is mounted to the plastic member via a bracket or the like.

The sensor 140 is mounted to the top surface of the first pressure-receiving member 30 and the blower 110 is mounted to the under surface of the first pressure-receiving member; therefore, for example, the sensor 140 and the blower 110 can be disposed in a compact manner compared to an alternative configuration in which both the sensor and the blower are disposed on a same side of the first pressure-receiving member in the up-down direction.

As an additional note, when both the sensor and the blower are mounted to the same side of the first pressure-receiving member in the up-down direction, the blower must be disposed a certain distance away from the sensor so as not to interfere with detection of the sensor; therefore, it is difficult to dispose the sensor and the blower in a compact manner. In the first embodiment, the blower 110 does not interfere with the detection of the sensor 140 even when the blower 110 is disposed close to the sensor 140. Thus, the sensor 140 and the blower 110 can be disposed in a compact manner.

The position of the second end portion 122 of the duct 120 in the front-rear direction overlaps the position of the sensor 140 in the front-rear direction; therefore, the sensor 140 and the second end portion 122 of the duct 120 can be disposed in a compact manner in the front-rear direction.

The second end portion 122 of the duct 120 is disposed on the left side and the sensor 140 is disposed on the right side with respect to the central portion of the first pressure-receiving member 30 in the lateral direction; therefore, for example, an increase in size of the first pressure-receiving member 30 can be restrained compared to an alternative configuration in which the portion of the duct at which the duct and the air passage are connected to each other and the sensor are disposed on the same side in the lateral direction.

The sensor 140 is disposed in a position that does not overlap a position of the duct 120 as viewed from above; therefore, the duct can be made shorter. Further, the duct can be made in a simpler shape.

The sensor 140 is disposed in a position that does not overlap a position of the blower 110 as viewed from above; therefore, vibrations caused by the operation of the blower 110 can be restrained from interfering with the detection of the sensor 140.

The position of the sensor 140 in the lateral direction does not overlap a position of the blower 110 in the lateral direction; therefore, the sensor 140 can be disposed further away from the blower 110.

The position of the blower 110 overlaps positions of the side frame covers 40 in the front-rear direction and the position of the sensor 140 in the front-rear direction is closer, than the side frame covers 40, to the front end portions of the first side frames 11; therefore, the sensor 140 can be disposed further apart from the blower 110.

The blower 110 is disposed in a position that does not overlap a position of the longitudinal wire 32 as viewed from above; therefore, the blower 110 can be disposed in a position that overlaps a position of the longitudinal wire 32 in the up-down direction, which is a direction in which the first pressure-receiving member 30 and the occupant are opposed to each other. Thus, the first pressure-receiving member 30 and the blower 110 can be disposed in a compact manner in the up-down direction.

The position of the blower 110 in the front-rear direction overlaps the bent portions 321D and 321E of the longitudinal wire 32; therefore, the blower 110 can be mounted in close proximity to the bent portions 321D and 321E, which are portions of the longitudinal wire 32 having high rigidity. Thus, the mounting strength of the blower 110 can be enhanced.

The position of the ECU 130 in the front-rear direction overlaps a position of the second bent portion 321E of the longitudinal wire 32 in the front-rear direction; therefore, the ECU 130 can be mounted in close proximity to the second bent portion 321E, which is a portion of the longitudinal wire 32 having high rigidity. Thus, the mounting strength of the ECU 130 can be enhanced.

The ECU 130 is disposed in a position that does not overlap a position of the longitudinal wire 32 as viewed from above; therefore, the ECU 130 can be disposed in a position that overlaps a position of the longitudinal wire 32 in the up-down direction. Thus, the first pressure-receiving member 30 and the ECU 130 can be disposed in a compact manner in the up-down direction.

The blower 110 is disposed between the central wire 32A and the first side wire 32B as viewed from above; therefore, the blower 110 can be mounted to a portion of the first pressure-receiving member 30 between the central wire 32A and the first side wire 32B that is reinforced by the central wire 32A and the first side wire 32B. Thus, the mounting strength of the blower 110 can be enhanced.

The second end portion 122 of the duct 120 is disposed in a position closer to the lateral wire 33 than to the blower 110 as viewed from above; therefore, the second end portion 122 of the duct 120 can be disposed near a portion of the first pressure-receiving member 30 reinforced by the lateral wire 33.

The blower 110 is disposed on the right side and the ECU 130 is disposed on the left side with respect to the central wire 32A; therefore, for example, positions for mounting the blower 110 and the ECU 130 can be more easily secured compared to an alternative configuration in which the blower and the controller is disposed on the same side in the lateral direction.

The blower 110 is disposed between the central wire 32A and the first side wire 32B as viewed from above; therefore, the blower 110 can be mounted to a portion of the first pressure-receiving member 30 between the central wire 32A and the first side wire 32B which is reinforced by the central wire 32A and the first side wire 32B. The ECU 130 is disposed between the central wire 32A and the second side wire 32C as viewed from above; therefore, the ECU 130 can be mounted to a portion of the first pressure-receiving member 30 between the central wire 32A and the second side wire 32C which is reinforced by the central wire 32A and the second side wire 32C. Thus, the mounting strength of the blower 110 and the ECU 130 can be enhanced.

The lateral wire 33 extends along front edges 351A and 352A of the through holes 351 and 352 of the plastic member 31; therefore, the edges of the through holes 351 and 352 of the plastic member 31 can be reinforced by the lateral wire 33.

The plastic member 31 comprises the mesh portion 360; therefore, cushioning properties of the first pressure-receiving member 30 can be enhanced. Further, the weight of the first pressure-receiving member 30 can be reduced.

The thick portion 361 is provided around the blower mounting portion 390; therefore, the strength of the blower mounting portion 390 can be enhanced, and the mounting strength of the blower 110 can be enhanced. The thick portion 361 is provided around the blower mounting portion 390; therefore, the amount of protrusion of the engaging portion 152 engaged with the blower mounting portion 390 can be made relatively smaller.

The end portion of the engaging portion 152 engaged with the blower mounting portion 390 protrudes further downward than the blower mounting portion 390; therefore, the amount of protrusion of the mounting member 150 in the upward direction can be made smaller.

The thick portion 361 protrudes further upward than the mounting member 150; therefore, it is possible to configure the mounting member 150 such that the mounting member 150 does not protrude further upward than the thick portion 361.

The first to-be-mounted portion 114A of the blower 110 is disposed in contact with the thick portion 361B and the thick portion 361C; therefore, rattling of the first to-be-mounted portion 114A can be restrained. The second to-be-mounted portion 114B of the blower 110 is disposed in contact with the thick portion 361D and the thick portion 361E; therefore, rattling of the second to-be-mounted potion 114B can be restrained. Thus, rattling of the blower 110 can be restrained.

The blower mounting portion 390 is provided on the right side with respect to the central portion of the first pressure-receiving member 30 in the lateral direction; therefore, the blower 110 can be disposed on the right side with respect to the central portion of the first pressure-receiving member 30 in the lateral direction, and space for mounting members other than the blower 110 such as the ECU 130 can be secured on the left side.

The first pressure-receiving member 30 includes the mesh portion 360 on which the blower mounting portion 390 is provided; therefore, cushioning properties of the first pressure-receiving member 30 can be enhanced by the mesh portion 360 while providing the blower mounting portion 390 on the first pressure-receiving member 30.

The blower mounting portion 390 is provided in contact with the frame portion 370 that surrounds the mesh portion 360; therefore, strength of the blower mounting portion 390 can be enhanced, and mounting strength of the blower 110 can thereby be further enhanced.

Next, modifications of the first embodiment will be described.

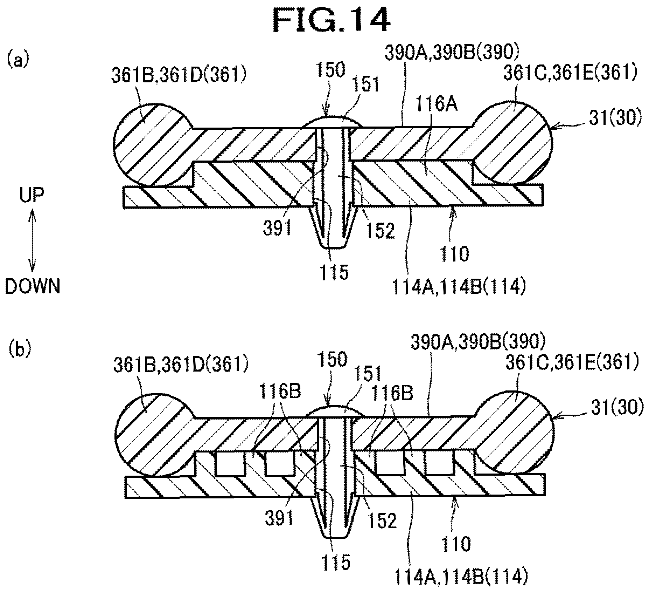

As shown in FIGS. 14(a) and 14(b), the blower 110 may be configured to comprise protrusions 116A and 116B that protrude from the to-be-mounted portion 114 toward the blower mounting portion 390. For example, as shown in FIG. 14(a), the protrusion 116A may be configured to have a shape of a quadrangular prism or a cylinder. The protrusion 116A may have a shape of a trapezoid.

As shown in FIG. 14(b), for example, the protrusion 116B may be configured to have a shape of a rib extending in the front-rear direction with a plurality of the protrusions 116B aligned side-by-side in the lateral direction. The protrusion 116B may be configured to have a shape of a rib extending in the lateral direction with a plurality of the protrusions 116B aligned side-by-side in the front-rear direction.

The protrusions 116A and 116B contact the blower mounting portion 390 from below in a state where the engaging portion 152 of the mounting member 150 engages the first through hole 391 of the blower mounting portion 390 and the second through hole 115 of the to-be-mounted portion 114. By the blower 110 further comprising the protrusions 116A and 116B in contact with the blower mounting portion 390, in a configuration in which the to-be-mounted portion 114 is disposed in contact with the thick portions 361B and 361C or 361D and 361E, rattling of the to-be-mounted portion 114 can be further restrained by the protrusions 116A and 116B and the thick portions 361B and 361C or 361D and 361E. Thus, rattling of the blower 110 can be further restrained.

Next, a second embodiment will be described. The following description focuses on points that differ from the embodiment described above. As to points that are the same as the embodiment described above, the same reference characters will be affixed to the same elements and description thereof will be omitted.

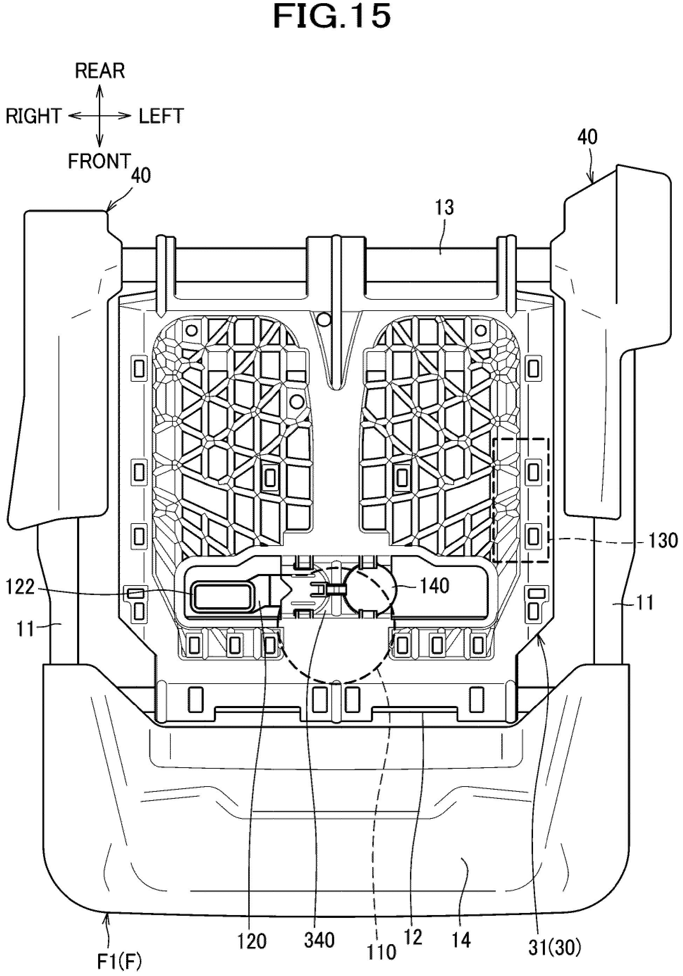

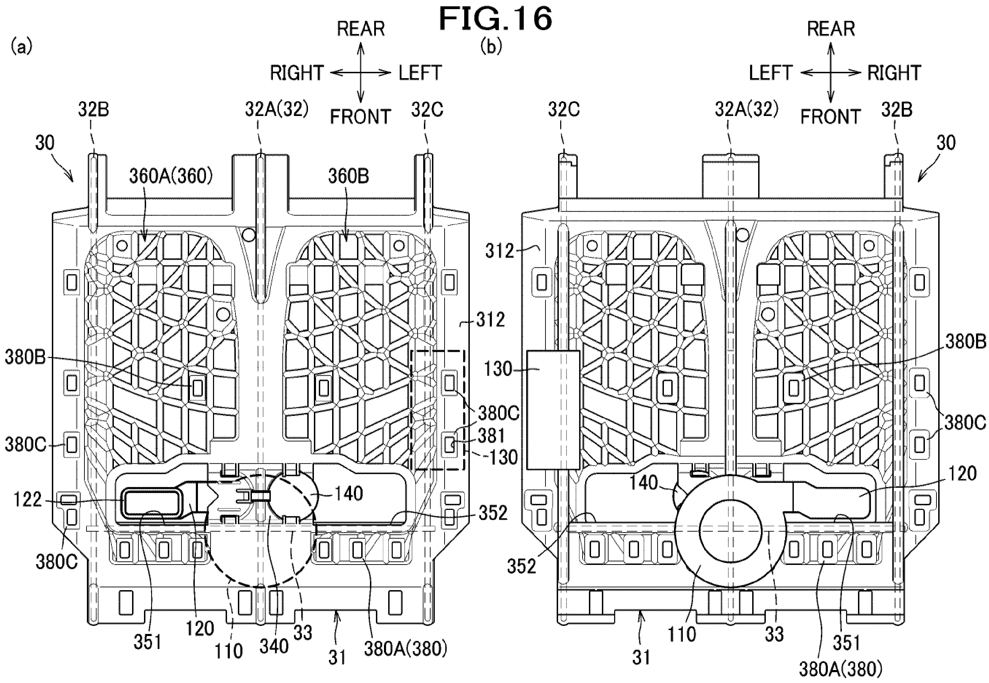

As shown in FIG. 15 and FIGS. 16(a) and 16(b), the blower 110 is mounted below the sensor mounting portion 340 provided on the plastic member 31 of the first pressure-receiving member 30 in the second embodiment. The blower 110 is mounted directly on the pressure-receiving member 30. In one example, the blower 110 comprises a to-be-mounted portion having a plate shape and is fixed on the plastic member 31 by screws, rivets, etc.

The blower 110 is disposed on the central portion of the first pressure-receiving member 30 in the lateral direction. The blower 110 is disposed in a position that overlaps a position of the central wire 32 as viewed from above. The blower 110 is disposed in a position that does not overlap positions of the first side wire 32B and the second side wire 32C as viewed from above. The blower 110 is disposed between the first side wire 32B and the second side wire 32C as viewed from above. The blower 110 is disposed in a position that overlaps a position of the lateral wire 33 as viewed from above.

A position of the blower 110 in the front-rear direction is closer, than the side frame covers 40, to the front end portions of the first side frames 11. More specifically, the blower 110 is disposed frontward of the front ends of the side frame covers 40 as viewed from above.

The position of the blower 110 in the front-rear direction overlaps positions of the through holes 351 and 352 in the front-rear direction. More specifically, the blower 110 is disposed on the left side of the through hole 351 as viewed from above. The blower 110 is disposed on the right side of the through hole 352 as viewed from above. In other words, the blower 110 is disposed in a position between the through hole 351 and the through hole 352.

The blower 110 is disposed in a position that overlaps a position of the sensor 140 as viewed from above. In other words, the sensor 140 is disposed in a position that overlaps a position of the blower 110 as viewed from above. A position of the sensor 140 in the front-rear direction overlaps a position of the blower 110 in the front-rear direction. A position of the sensor 140 in the lateral direction overlaps a position of the blower 110 in the lateral direction. The sensor 140 is disposed above the blower 110. The blower 110 and the sensor 140 are opposed to each other in the up-down direction with the sensor mounting portion 340 disposed therebetween.

In the second embodiment, the duct 120 extends toward the right from the blower 110, and then is bent to extend upward. The duct 120 extends from the lower side of the first pressure-receiving member 30, through the through hole 351, to the upper side of the first pressure-receiving member 30.

The duct 120 is disposed in a position that does not overlap a position of the mounting portion 380 as viewed from above. More specifically, the duct 120 is disposed in a position that does not overlap a position of any of the first mounting portions 380A, the second mounting portions 380B, or the third mounting portions 380C as viewed from above.

In the second embodiment, the ECU 130 is mounted to the mounting portion 380 provided on the first pressure-receiving member 30. More specifically, the ECU 130 is mounted to the third mounting portion 380C provided on the left side support portion 312. For example, the ECU 130 is mounted to the first pressure-receiving member 30 by engaging a clip, a claw provided on the ECU 130 itself, or another member with the mounting hole 381.

The ECU 130 is disposed in a position that does not overlap a position of the central wire 32A and the first side wire 32B as viewed from above. The ECU 130 is disposed on the left side of the central wire 32A. The ECU 130 is disposed in a position that overlaps a position of the second side wire 32C as viewed from above.

Next, advantageous effects of the car seats according to the second embodiment will be described.

The position of the blower 110 in the front-rear direction overlaps a position of the through hole 351 of the first pressure-receiving member 30 in the front-rear direction; therefore, a distance between the blower 110 and the through hole 351 can be reduced. Thus, the duct 120 can be made shorter.

The position of the blower 110 in the front-rear direction is closer, than the side frame covers 40, to the front end portions of the first side frames 11; therefore, the blower 110 can be disposed apart from the side frame covers 40.

The sensor 140 is disposed in a position that overlaps a position of the blower 110 as viewed from above; therefore, the sensor 140 and the blower 110 can be more compactly disposed.

Although the first embodiment and the second embodiment have been described above, the vehicle seat can be modified accordingly when implemented as shown in the examples given below.

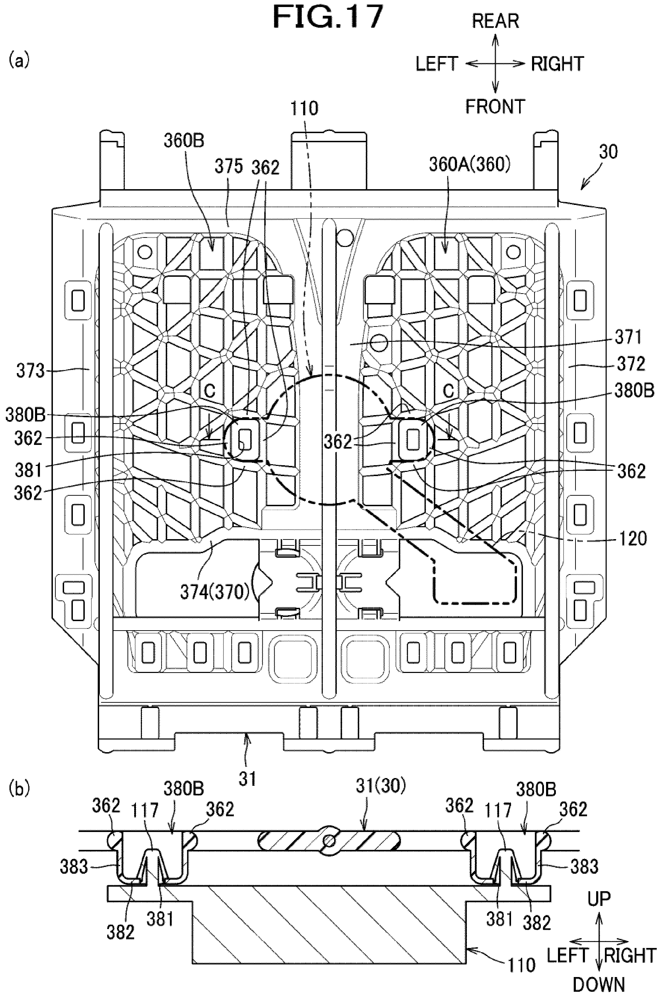

In the above-described embodiment, the car seat S is configured to comprise the mounting member 150 having the engaging portion 152; however, for example, the car seat S may not comprise the mounting member 150 and the blower 110 may be configured to comprise an engaging portion 117, as in a first modification shown in FIGS. 17(a) and 17(b). In the first modification, the blower 110 is mounted to the first pressure-receiving member 30 by the engaging portion 117 engaged with the mounting hole 381 of the second mounting portion 380B from below. The blower 110 comprises the engaging portion 117; therefore, a mounting member including an engaging portion will not be necessary, and the number of components can be reduced.

The second mounting portion 380B comprises a bottom wall 382 on which the mounting hole 381 is provided and a side wall 383 protruding upward from the outer periphery of the bottom wall 382. The upper edge of the side wall 383 is connected with a web portion 362 of the mesh portion 360 (360A, 360B). In the first modification, the bottom wall 382 corresponds to the "blower mounting portion" and the mounting hole 381 corresponds to the "first through hole". The side wall 383 and the web portion 362 correspond to the "thick portion".

In the first modification, the side wall 383 and the web portion 362 as the thick portion are provided around the entire periphery of the bottom wall 382, not a part of the periphery of the bottom wall 382. In other words, in the first modification, the bottom wall 382 as the blower mounting portion is not in contact with the frame portion 370 (371 to 375). In the first modification, the side wall 383 and the web portion 362 as the thick portion only protrude upward of the bottom wall 382, and do not protrude downward of the bottom wall 382.

The end portion of the engaging portion 117 protrudes upward of the bottom wall 382. The web portion 362, of the side wall 383 and the web portion 362 constituting the thick portion, protrudes upward of the engaging portion 117. More specifically, the web portion 362 protrudes upward of the end portion of the engaging portion 117. In other words, the engaging portion 117 does not protrude upward of the web portion 362.

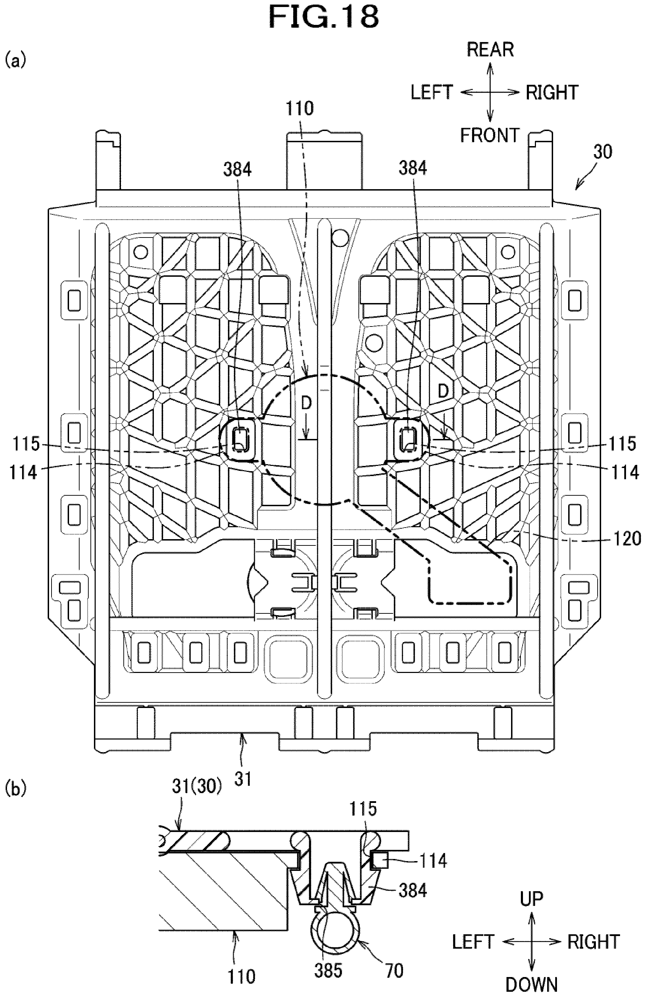

The car seat S may be configured such that the first pressure-receiving member 30 comprises an engaging portion 384, as in the second modification shown in FIGS. 18(a) and 18(b). More specifically, the engaging portion 384 protrudes downward from the plastic member 31. In the second modification, the blower 110 is mounted to the first pressure-receiving member 30 by the engaging portion 384 engaging the second through hole 115 of to-be-mounted portion 114 provided on the blower 110 from above. The first pressure-receiving member 30 comprises the engaging portion 384; therefore, the mounting member comprising the engaging portion will not be necessary, and the number of components can thereby be reduced.

The engaging portion 384 may comprise a mounting hole 384 extending through the engaging portion 384 in the up-down direction at an end portion thereof. A member other than the blower 110 may be mounted to the mounting hole 384. For example, a harness clip 70 configured to hold a harness can be engaged with the mounting hole 385 to mount the harness on the first pressure-receiving member 30.

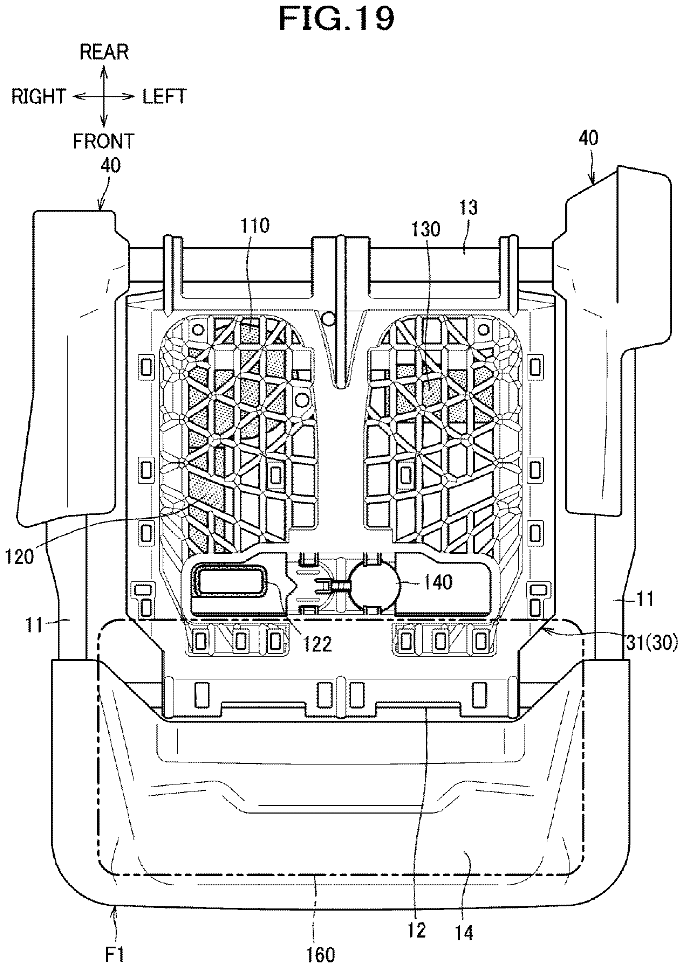

The car seat S may be configured to comprise a seat cushion air bag 160 as in the third modification shown in FIG. 19. The seat cushion air bag 160 inflates at a time of a crash to restrain a so-called submarining, in which the occupant slides out of the car seat S into a footwell, from occurring. The seat cushion airbag 160 is disposed above the pan frame 14.

The blower 110, the duct 120, the ECU 130, and the sensor 140 are each disposed in a position that does not overlap a position of the uninflated seat cushion airbag 160 as viewed from above. More specifically, the blower 110, the duct 120, the ECU 130, and the sensor 140 are each disposed rearward of the uninflated seat cushion airbag 160 as viewed from above.

The second end portion 122 of the duct 120 is disposed in a position that does not overlap a position of the seat cushion airbag 160 as viewed from above. More specifically, the second end portion 122 of the duct 120 is disposed rearward of the uninflated seat cushion airbag 160.

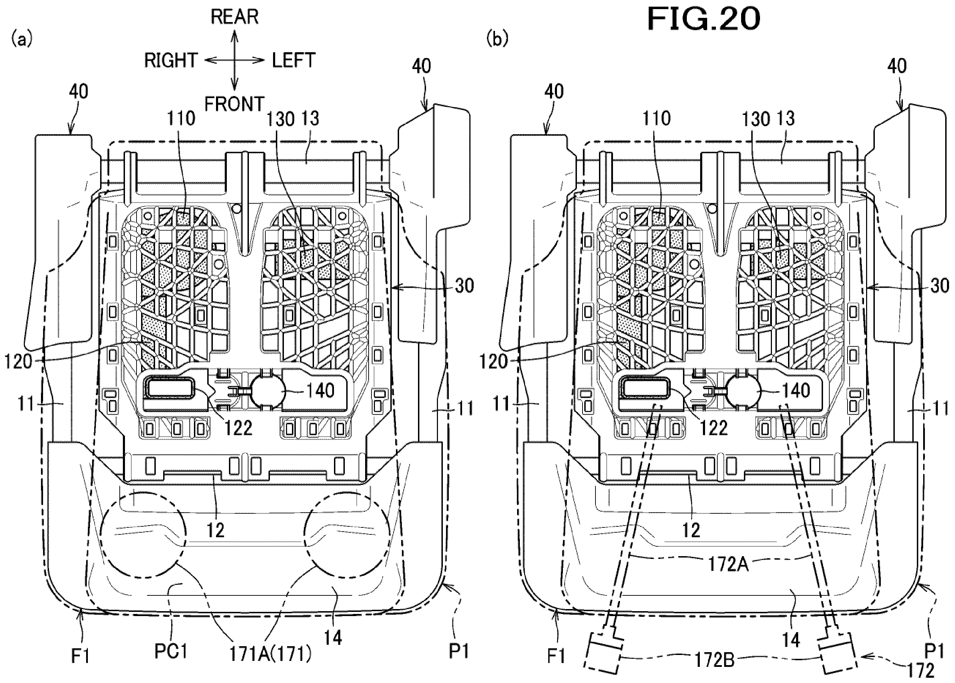

As shown in FIGS. 20(a) and 20(b), the car seat S may be configured to comprise vibration generators 171 and 172. For example, the vibration generator 171 comprises two eccentric motors 171A as in the fourth modification shown in FIG. 20(a). The eccentric motors 171A are, for example, each disposed in a left or right recess formed on a front portion of the first central portion PC1 of the seat cushion pad P1.

The blower 110, the duct 120, the ECU 130 and the sensor 140 are each disposed in a position that does not overlap positions of the eccentric motors 171A as viewed from above. More specifically, the blower 110, the duct 120, the ECU 130, and the sensor 140 are each disposed rearward of the eccentric motors 171A as viewed from above.

The vibration generator 172 comprises vibration transmitting members 172A each having a shape of a rod and vibration outputting devices 172B that output vibrations to the vibration transmitting members 172A as in the fifth modification shown in FIG. 20(b). The vibration transmitting members 172A are disposed inside the seat cushion pad P1.

The blower 110, the duct 120, the ECU 130, and the sensor 140 are each disposed in a position that does not overlap positions of the vibration transmitting members 172A as viewed from above. The blower 110, the duct 120, and the ECU 130 are each disposed rearward of the rear ends of the vibration transmitting members 172A as viewed from above. The sensor 140 is disposed between the rear ends of the two vibration transmitting members 172A as viewed from above.

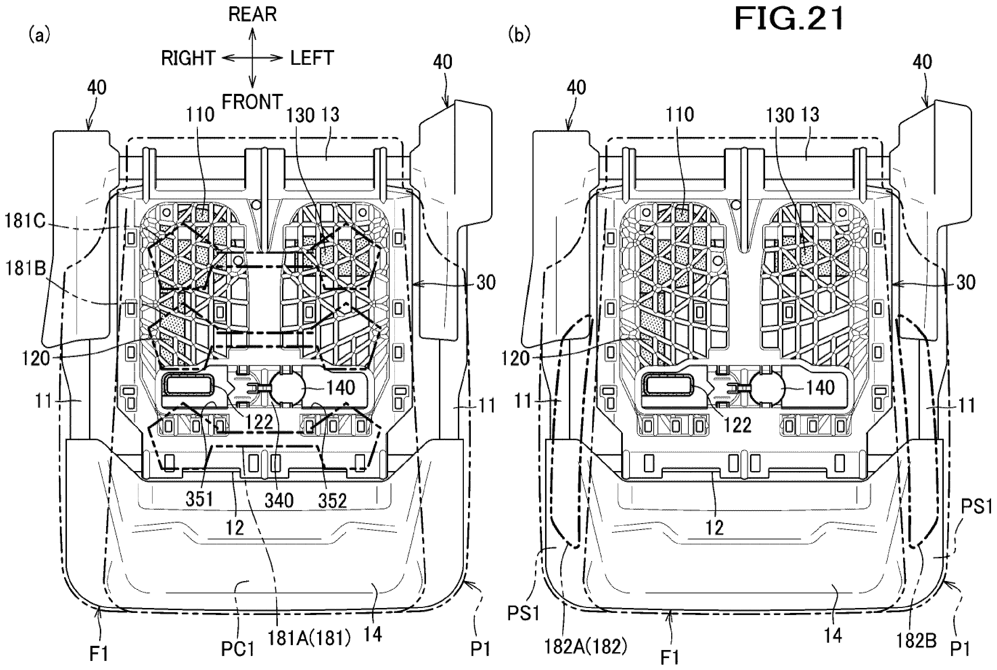

As shown in FIGS. 21(a) and 21(b), the car seat S may be configured to comprise a plurality of air pouches 181 and 182. The car seat S comprising the air pouches 181 and 182 may, for example, change a position at which the occupant is supported by adjusting the amount of air inside the air pouches 181 and 182. The car seat S comprising the air pouches 181 and 182 provides the occupant with effects of, for example, massaging and awakening, by repeatedly inflating and deflating the air pouches 181 and 182.

A plurality of the air pouches 181 are disposed between the central portion PC1 of the seat cushion pad P1 and the seat cushion outer covering SK1 as in the sixth modification shown in FIG. 21(a). More specifically, the air pouches 181 include a first air pouch 181A, a second air pouch 181 B disposed rearward of the first air pouch 181A, and a third air pouch 181C disposed rearward of the second air pouch 181B.

The first air pouch 181A and the second air pouch 181B are disposed to sandwich the sensor mounting portion 340 and the through holes 351, 352 therebetween from the front and rear as viewed from above. The second end portion 122 of the duct 120 and the sensor 140 are each disposed in a position that does not overlap positions of the air pouches 181 as viewed from above. More specifically, the second end portion 122 of the duct 120 and the sensor 140 are each disposed between the first air pouch 181A and the second air pouch 181B as viewed from above. The blower 110 may be disposed in a position that does not overlap the positions of the air pouches 181 as viewed from above. The ECU 130 may be disposed in a position that does not overlap the positions of the air pouches 181 as viewed from above.

The air pouch 182 is disposed between each of the first side portions PS1 of the seat cushion pad P1 and the seat cushion outer covering SK1 as in the seventh modification shown in FIG. 21(b). More specifically, the air pouch 182 includes a right air pouch 182A disposed at the right first side portion PS1 and a left air pouch 182B disposed at the left first side portion PS1.

The blower 110, the duct 120, the ECU 130, and the sensor 140 are each disposed in a position that does not overlap positions of the air pouches 182 as viewed from above. More specifically, the blower 110, the duct 120, the ECU 130, and the sensor 140 are each disposed between the right air pouch 182A and the left air pouch 182B as viewed from above.

The second end portion 122 of the duct 120 and the sensor 140 are each disposed in a position that does not overlap the positions of the air pouches 182 as viewed from above. More specifically, the second end portion 122 of the duct 120 and the sensor 140 are each disposed between the right air pouch 182A and the left air pouch 182B as viewed from above.

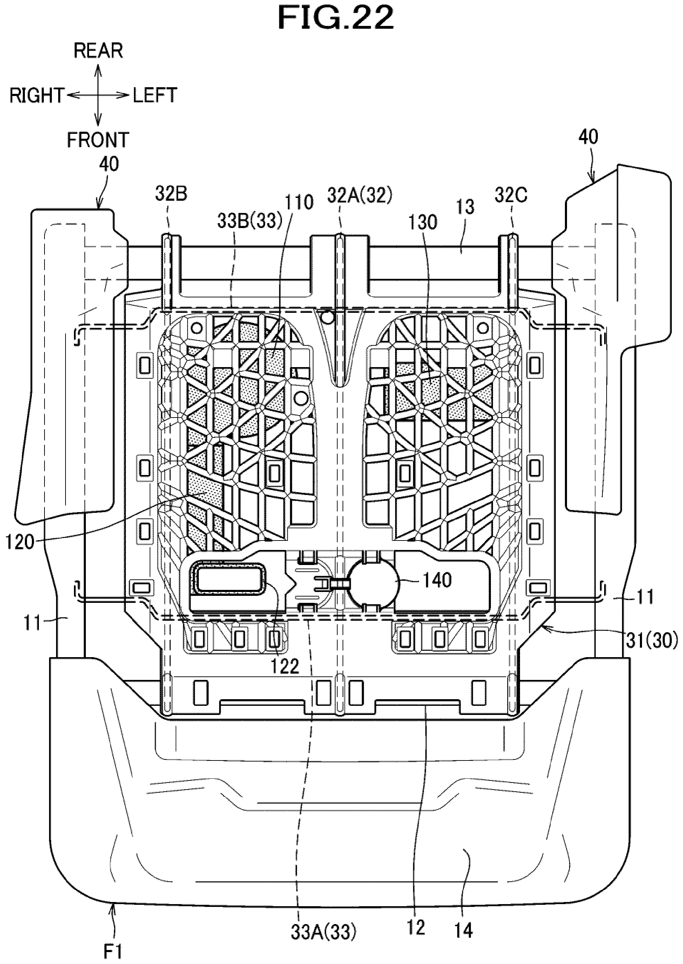

In the above-described embodiment, the longitudinal wire 32 bridging the front frame 12 and the rear frame 13 is given as an example of the first reinforcing wire; however, the first reinforcing wire may be a wire bridging the left and right first side frames 11. As one example, the lateral wire 33 as the first reinforcing wire includes a front wire 33A and a rear wire 33B as in the eighth modification shown in FIG. 22.

Each of the front wire 33A and the rear wire 33B extends in the lateral direction with right end portions engaged with the first right side frame 11 and left end portions engaged with the left first side frame 11. The central portions of the front wire 33A and the rear wire 33B in the lateral direction are each covered by the plastic member 31. The left and right end portions of the front wire 33A and the rear wire 33B may be covered by plastic and the like.

The blower 110, the duct 120, the ECU 130, and the sensor 140 are each disposed in a position that does not overlap a position of the lateral wire 33 as viewed from above. More specifically, the blower 110, the duct 120, the ECU 130, and the sensor 140 are each disposed between the front wire 33A and the rear wire 33B as viewed from above.

In a configuration in which the lateral wire 33 bridges the left and right first side frames 11, the longitudinal wire 32 (the wire extending in the front-rear direction) may not be configured to bridge the front frame 12 and the rear frame 13. The first pressure-receiving member may not be configured to comprise a wire extending in the front-rear direction.

In the above-described embodiment, the ECU 130 is mounted to the first pressure-receiving member 30; however, the ECU 130 may be mounted to a member other than the first pressure-receiving member 30. For example, the ECU 130 may be mounted to the seat frame F, such as on the first side frames 11.

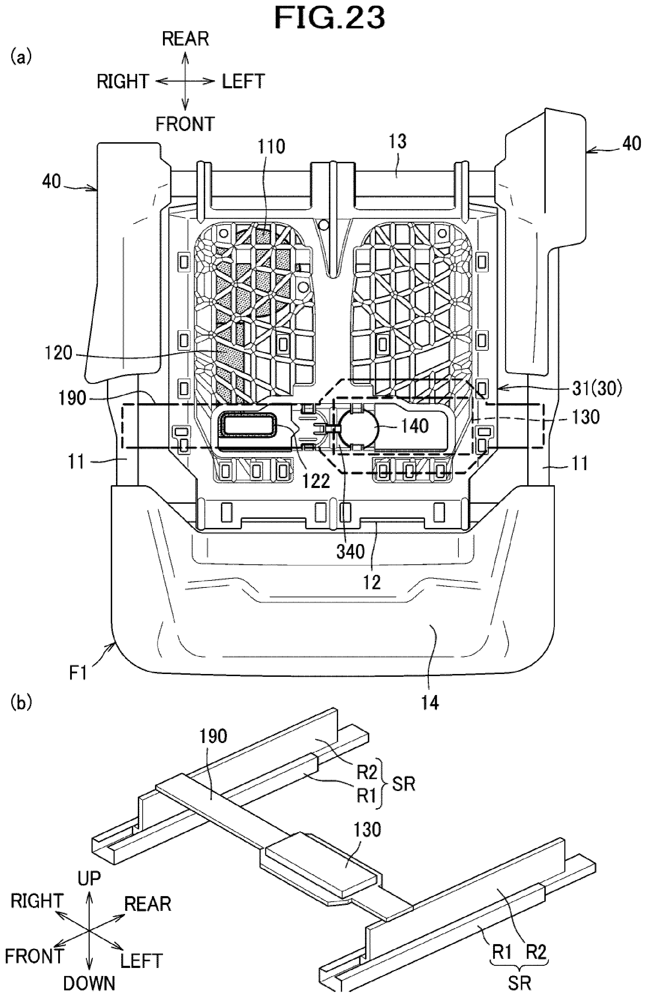

The car seat S may comprise a support member 190 mounted to the left and right upper rails R2 to bridge the left and right upper rails R2 and the ECU 130 may be mounted to the support member 190, as in the ninth modification shown in FIGS. 23(a) and 23(b). The support member 190 is, for example, made of sheet metal, plastic, etc. The ECU 130 is, for example, mounted to a top surface of the support member 190. The seat cushion S1, the supporting member 190, and the ECU 130 are slidable in the front-rear direction with the upper rail R2.

In the ninth modification, the blower 110 is mounted to the first pressure- receiving member 30 in the same manner as in the first embodiment. In the ninth modification, as shown in FIG. 23(a), the blower 110 and the duct 120 are disposed in a position that does not overlap a position of the ECU 130 as viewed from above. In such a configuration, the blower 110 and the duct 120 can be disposed in a position that overlaps a position of the ECU 130 in the up-down direction; therefore, the car seat S can be made more compact in the up-down direction. The sensor 140 is disposed in a position that overlaps a position of the ECU 130 as viewed from above. The sensor 140 is disposed on a top surface of the sensor mounting portion 340 and the ECU 130 is disposed on the lower side of the sensor mounting portion 340.

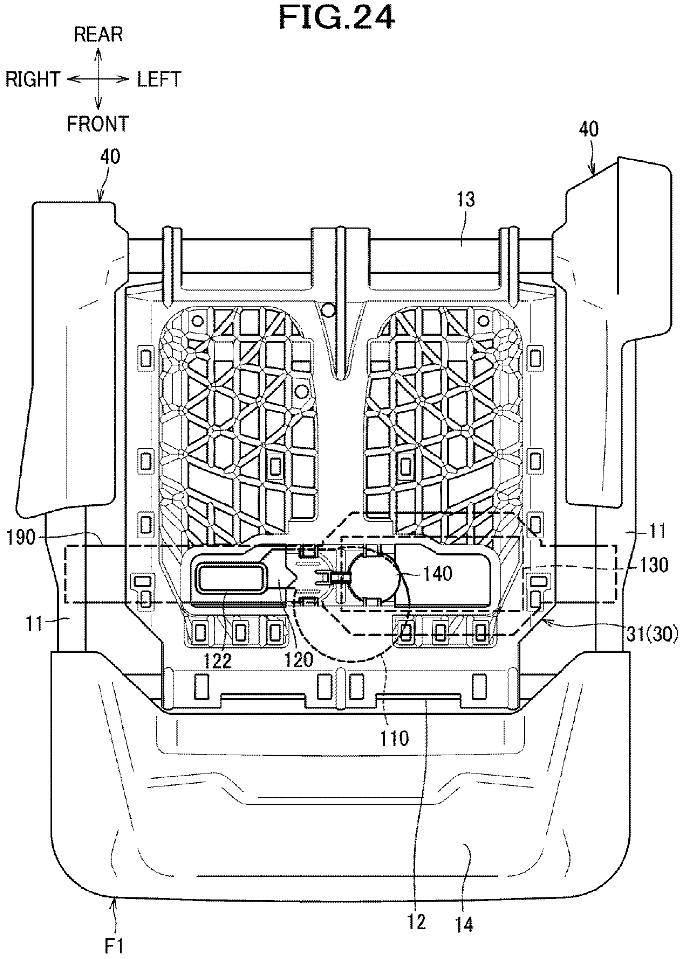

In the tenth modification shown in FIG. 24, the blower 110 is mounted to the first pressure-receiving member 30 in the same manner as in the second embodiment, and the ECU 130 is mounted to the support member 190 in the same manner as in the ninth modification (refer to FIG. 23(b)). In the tenth modification, the blower 110 is disposed in a position that overlaps a position of the ECU 130 as viewed from above. More specifically, the blower 110 is disposed above the ECU 130. In such a configuration, the wiring connecting the blower 110 and the ECU 130 can be made shorter.

In the above-described embodiment, the blower mounting portion 390 is provided in the mesh portion 360 of the first pressure-receiving member; however, for example, the blower mounting portion may be provided on a portion of the first pressure-receiving member other than the mesh portion such as the side support portion, the sensor mounting portion, and the frame portion.

Next, the third embodiment will be described.

Patent Document 1 describes a car seat comprising a frame including left and right side frames, a supporting panel disposed between the left and right side frames, and a seat pad. A plurality of air passages is formed in the seat pad. The air passages pass through the back surface side and the front surface side of the seat pad.

Incidentally, the cushioning properties are reduced at the part of the pad where the air passages are formed.

Thus, it would be desirable to compensate for the reduction in cushioning properties of the part of the pad where the air passages are formed.

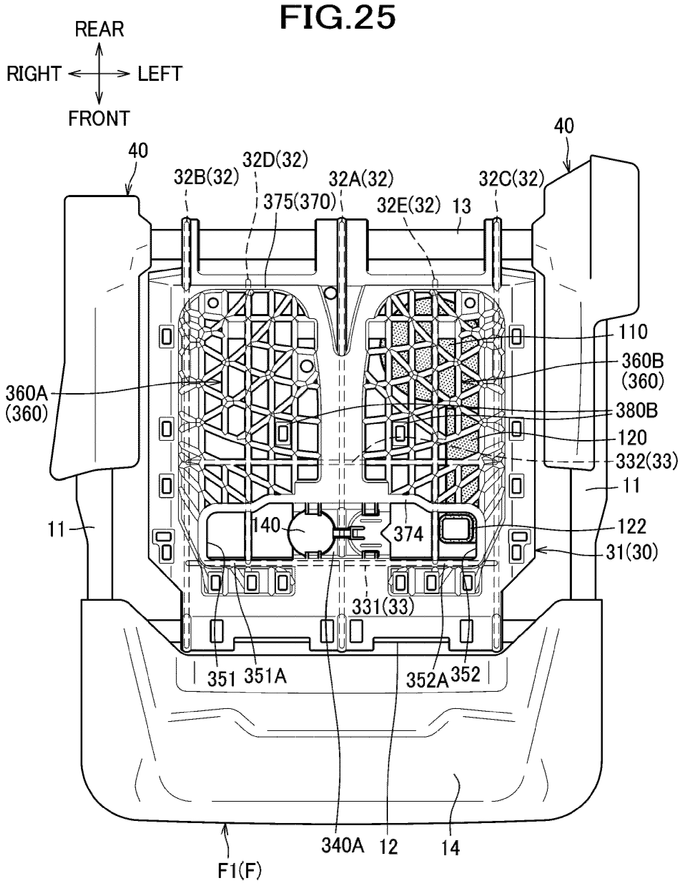

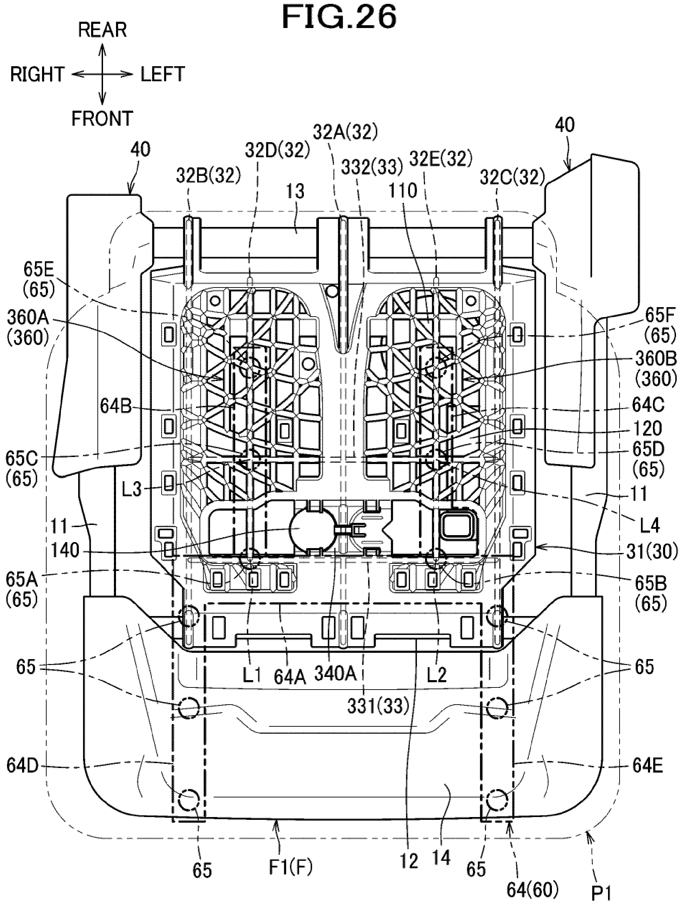

As shown in FIG. 25, the car seat S of the third embodiment comprises the seat frame F, the first pressure-receiving member 30, and the cushion pad P1 (refer to FIG. 26) that covers the seat frame F and the first pressure-receiving member 30.

The longitudinal wire 32 of the first pressure receiving member 30 includes the central wire 32A as a first longitudinal wire, the first side wire 32B as a second longitudinal wire, the second side wire 32C as a third longitudinal wire, a third side wire 32D as a fourth longitudinal wire, and a fourth side wire 32E as a fifth longitudinal wire.

The third side wire 32D is located between the central wire 32A and the first side wire 32B. The third side wire 32D extends in the front-rear direction from the vicinity of the front edge 351A of the through hole 351 to the vicinity of the fifth frame portion 375 of the frame portion 370.

The fourth side wire 32E is located between the central wire 32A and the second side wire 32C. The fourth side wire 32E extends in the front-rear direction from the vicinity of the front edge 352A of the through hole 352 to the vicinity of the fifth frame portion 375.

The lateral wire 33 includes a first lateral wire 331 and a second lateral wire 332. The first lateral wire 331 extends through the front edges 351A and 352A of the through holes 351 and 352.

The second lateral wire 332 is aligned side-by-side with the first lateral wire 331 in the front-rear direction. The second lateral wire 332 is located rearward of the first lateral wire 331. The second lateral wire 332 is located between the rear edge (fourth frame portion 374) of the through holes 351 and 352 and the second mounting portion 380B in the front-rear direction.

The first pressure-receiving member 30 is formed by insert molding or the like such that the plastic member 31 covers and is integrally formed with the central wire 32A, the first side wire 32B, the second side wire 32C, the third side wire 32D, the fourth side wire 32E, the first lateral wire 331, and the second lateral wire 332. The central wire 32A, the first side wire 32B, the second side wire 32C, the third side wire 32D, the fourth side wire 32E, the first lateral wire 331, and the second lateral wire 332 are located inside the plastic member 31.

The blower 110 is located below a rear end portion of the second mesh portion 360B.

The duct 120 extends from the lower side of the first pressure-receiving member 30, through the through hole 352, to the upper side of the first pressure-receiving member 30.

The sensor 140 is attached to the first sensor mounting portion 340A. In the third embodiment, the blower 110 and the duct 120 are located on the left side of the central wire 32A, and the sensor 140 is located on the right side of the central wire 32A.

As shown in FIG. 26, the seat cushion pad P1 includes the air passage 60. The air passage 60 includes a plurality of air holes 65. The air holes 65 extend in the up-down direction and open at the top surface of the seat cushion pad P1.

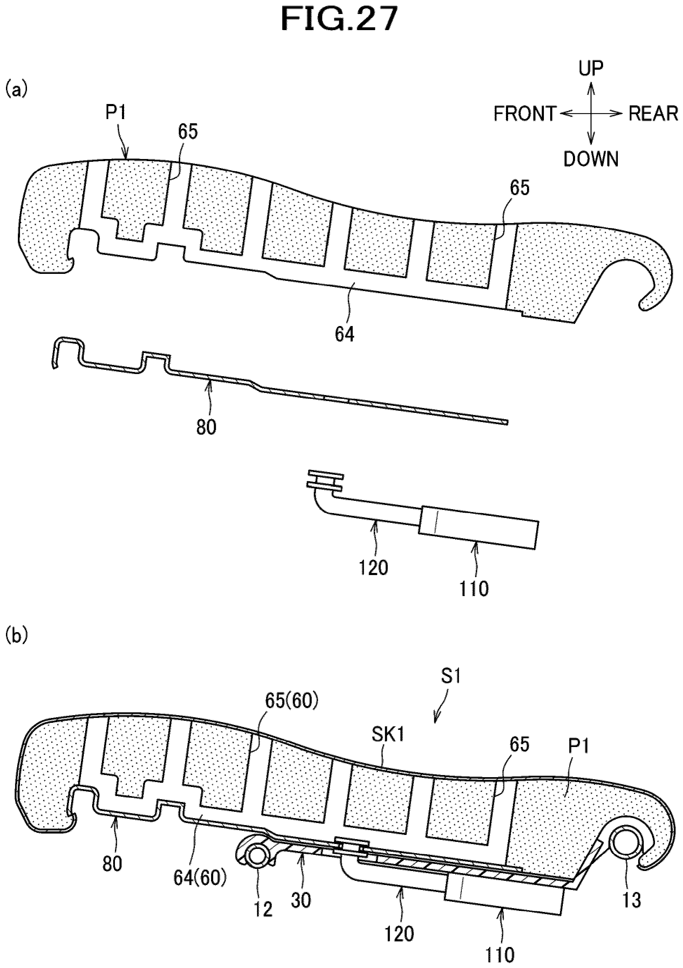

As shown in FIG. 27(a), the seat cushion pad P1 has an air channel 64 on an under surface thereof. The air channel 64 is a channel recessed upward. The car seat S further comprises a back cover 80. The back cover 80 is a plate-shaped member that covers the under surface of the seat cushion pad P1. In the third embodiment, the back cover 80 is a relatively thin clothlike member. As shown in FIG. 27(b), a part of the air passage 60 is formed by the air channel 64 being covered by the back cover 80. In the third embodiment, the portion of the air passage 60 extending in the front-rear direction or the lateral direction, excluding the air holes 65, is formed by the air channel 64 being covered by the back cover 80.

As shown in FIG. 26, the air channel 64 forming the air passage 60 includes a first air channel 64A, a second air channel 64B, a third air channel 64C, a fourth air channel 64D, and a fifth air channel 64E. The first air channel 64A extends in the lateral direction. The second air channel 64B extends rearward from the vicinity of the right end portion of the first air channel 64A. The third air channel 64C extends rearward from the vicinity of the left end portion of the first air channel 64A. The fourth air channel 64D extends frontward from the right end of the first air channel 64A. The fifth air channel 64E extends frontward from the left end of the first air channel 64A. The air holes 65 are aligned in the front-rear direction along the second air channel 64B, the third air channel 64C, the fourth air channel 64D or the fifth air channel 64E.

The air passage 60 overlaps the mesh portion 360 as viewed from above.
Specifically, the second air channel 64B overlaps the first mesh portion 360A as viewed from above. The third air channel 64C overlaps the second mesh portion 360B as viewed from above.

The longitudinal wire 32 overlaps the air passage 60 as viewed from above. Specifically, a front end portion of the first side wire 32B overlaps a rear end portion of the fourth air channel 64D as viewed from above. A front end portion of the second side wire 32C overlaps a rear end portion of the fifth air channel 64E as viewed from above. The third side wire 32D overlaps the second air channel 64B as viewed from above. The fourth side wire 32E overlaps the third air channel 64C as viewed from above.

The side wire 33 overlaps the air passage 60 as viewed from above. Specifically, the first side wire 331 overlaps the first air channel 64A as viewed from above.

Overlapping portions of the longitudinal wire 32 and the lateral wire 33 overlap the air holes 65 as viewed from above. Specifically, the overlapping portion L1 of the third side wire 32D and the first lateral wire 331 overlaps an air hole 65A. The overlapping portion L2 of the fourth side wire 32E and the first lateral wire 331 overlaps an air hole 65B. The overlapping portion L3 of the third side wire 32D and the second lateral wire 332 overlaps an air hole 65C. The overlapping portion L4 of the fourth side wire 32E and the second lateral wire 332 overlaps an air hole 65D.

The air holes 65A, 65C and 65E in communication with the second air channel 64B overlap the third side wire 32D as viewed from above. The air holes 65B, 65D and 65F in communication with the third air channel 64C overlap the fourth side wire 32E as viewed from above.

The sensor 140 does not overlap the air passage 60 as viewed from above. The sensor 140 is located between the second air channel 64B and the third air channel 64C as viewed from above. The sensor 140 is located rearward of the first air channel 64A and adjacent to the first air channel 64A as viewed from above. The sensor 140 is located under the seat cushion pad P1. The sensor 140 is located above the first sensor mounting portion 340A of the first pressure-receiving member 30. In other words, the sensor 140 is located between the seat cushion pad P1 and the first sensor mounting portion 340A.

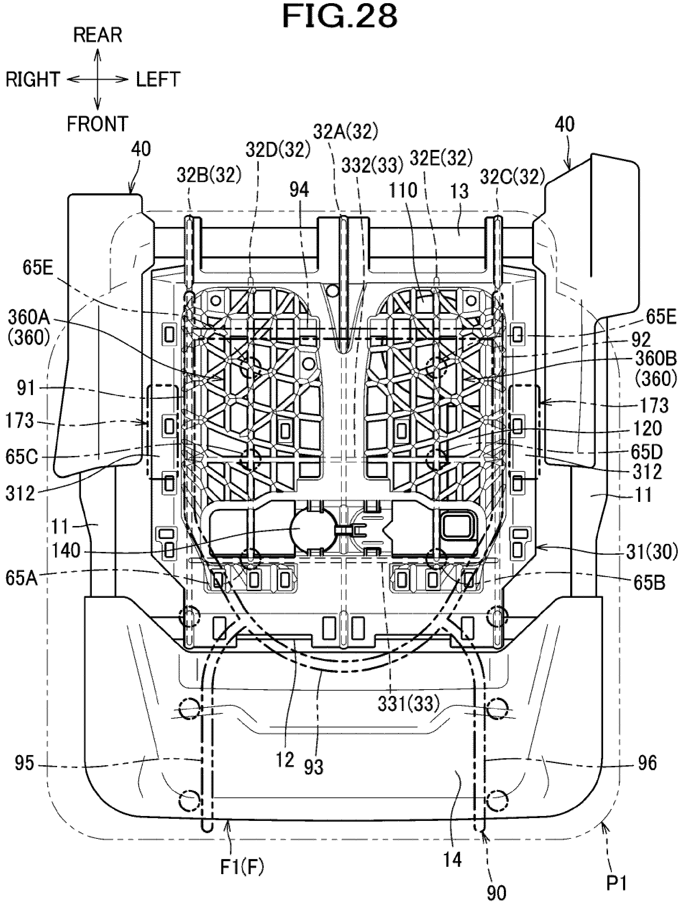

As shown in FIG. 28, the seat cushion pad P1 further includes a tuck-in groove 90 on the top surface thereof. The tuck-in groove 90 is a groove for tucking the seat cushion outer covering SK1 (refer to FIG. 27(b)) into the seat cushion pad P1.

The tuck-in groove 90 includes a first tuck-in groove 91, a second tuck-in groove 92, a third tuck-in groove 93, a fourth tuck-in groove 94, a fifth tuck-in groove 95, and a sixth tuck-in groove 96.

The first tuck-in groove 91 and the second tuck-in groove 92 extend in the front-rear direction. The first tuck-in groove 91 and the second tuck-in groove 92 are aligned side-by-side in the lateral direction.

The third tuck-in groove 93 extends to connect the front ends of the first tuck-in groove 91 and the second tuck-in groove 92. The third tuck-in groove 93 has a U-shape that curves convexly toward the front.

The fourth tuck-in groove 94 extends in the lateral direction to connect the rear ends of the first tuck-in groove 91 and the second tuck-in groove 92. The fourth tuck-in groove 94 is located rearward of the third tuck-in groove 93.

The air holes 65A to 65F are located within an area surrounded by the first tuck-in groove 91, the second tuck-in groove 92, the third tuck-in groove 93, and the fourth tuck-in groove 94 as viewed from above.

The fifth tuck-in groove 95 and the sixth tuck-in groove 96 extend frontward from the third tuck-in groove 93. The fifth tuck-in groove 95 and the sixth tuck-in groove 96 are aligned side-by-side in the lateral direction. The fifth tuck-in groove 95 and the sixth tuck-in groove 96 are located inward of the first tuck-in groove 91 and the second tuck-in groove 92 in the lateral direction.

The longitudinal wire 32 overlaps the tuck-in groove 90 as viewed from above. Specifically, the first side wire 32B overlaps the first tuck-in groove 91 as viewed from above. In other words, the first tuck-in groove 91 extends above and along the first side wire 32B in the front-rear direction. The second side wire 32C overlaps the second tuck-in groove 92 as viewed from above. In other words, the second tuck-in groove 92 extends above and along the second side wire 32C in the front-rear direction.

The car seat S further comprises a vibration generator 173. The vibration generator 173 comprises an eccentric motor and other components. The vibration generator 173 is disposed above the first pressure-receiving member 30. The vibration generator 173 is disposed in the seat cushion pad P1.

The vibration generator 173 is located in a position that does not overlap a position of the mesh portion 360 of the first pressure-receiving member 30 as viewed from above. Specifically, the vibration generator 173 is located in a position that overlaps a position of the side support portions 312 as a support portion as viewed from above. In more detail, two vibration generators 173 are provided. The two vibration generators 173 are aligned side-by-side in the lateral direction. The vibration generator 173 on the right side overlaps the side support portion 312 on the right side as viewed from above. The vibration generator 173 on the right side is located above the side support portion 312 on the right side. The vibration generator 173 on the left side overlaps the side support portion 312 on the left side as viewed from above. The vibration generator 173 on the left side is located above the side support portion 312 on the left side.

The position of the vibration generator 173 overlaps the position of the lateral wire 33 in the front-rear direction. In more detail, the positions of the vibration generators 173 on the left and right sides overlap the position of the second lateral wire 332 in the front-rear direction. The two vibration generators 173 and the second lateral wire 332 are aligned side-by-side in the lateral direction as viewed from above. The second lateral wire 332 is located between the two vibration generators 173 as viewed from above. The second lateral wire 332 is located below the vibration generators 173.

Next, the advantageous effects of the car seat S according to the third embodiment will be described.

The air passage 60 overlaps the mesh portion 360 of the first pressure-receiving member 30 as viewed from above; therefore, the reduction in cushioning properties of the seat cushion pad P1 at locations where the air passages 60 are formed can be compensated by the mesh portion 360. Since the mesh portion 360 flexes when the occupant is seated, the air passage can be restrained from being squeezed more than necessary.

The sensor 140 does not overlap the air passage 60 as viewed from above; therefore, the load of the occupant when seated can be accurately transmitted to the sensor 140 through the seat cushion pad P1 compared to an alternative configuration in which the sensor overlaps the air passage 60 as viewed from above. The air passage 60 is less likely to affect detection by the sensor 140.

The longitudinal wire 32 overlaps the air passage 60 as viewed from above; therefore, the reduction in cushioning properties of the seat cushion pad P1 at locations where the air passages 60 are formed can be compensated by the longitudinal wire 32.

The overlapping portions L1 to L4 of the longitudinal wire 32 and the lateral wire 33 overlap the air holes 65A to 65D; therefore, the reduction in cushioning properties of the seat cushion pad P1 at locations where the air holes 65A to 65D are formed can be compensated by the longitudinal wire 32 and the lateral wire 33.

The longitudinal wire 32 overlaps the tuck-in groove 90 as viewed from above; therefore, the load caused upon tucking in the seat cushion outer covering SK1 can be efficiently received by the longitudinal wire 32. In this way, the workability of tucking the seat cushion outer covering SK1 into the tuck-in groove 90 can be improved.

The vibration generator 173 does not overlap the mesh portion 360 as viewed from above; therefore, vibrations caused by the vibration generator 173 can be restrained from being absorbed by the mesh portion 360 and becoming less likely to be transmitted to the occupant.

The vibration generator 173 is located above the first pressure-receiving member 30 and overlaps the plate-shaped side support portion 312 as viewed from above; therefore, the load of the occupant can be supported by the plate-shaped side support portion 312 via the vibration generator 173. Further, since the vibration generator 173 is supported by the side support portion 312, vibrations are more easily transmitted to the occupant.

The car seat S of the third embodiment may be configured, for example, such that the longitudinal wire 32 does not overlap the air passage as viewed from above. The car seat S of the third embodiment may be configured such that the overlapping portions of the longitudinal wire 32 and the lateral wire 33 do not overlap the air holes as viewed from above. The car seat S of the third embodiment may be configured such that the longitudinal wire 32 does not overlap the tuck-in groove as viewed from above. The car seat S of the third embodiment may be configured such that the vibration generator 173 overlaps the mesh portion 360 as viewed from above. Further, the car seat S of the third embodiment may not comprise the vibration generator 173.

In the above-described embodiment, the wires 32 and 33 are configured to be entirely covered by the plastic member 31 (elastic member); however, the wires can be configured such that only a subset of the wires are covered by the plastic member (elastic member). In other words, a subset of the wires may be exposed by the plastic member (elastic member).

In the above-described embodiment, the side frame covers 40 are configured to cover the upper sides and the lateral inner sides of the rear end portions of the first side frames 11; however, for example, the side frame covers may be configured to cover only the lateral inner sides of the rear end portions of the first side frames. The car seat may be configured not to comprise the side frame covers.

In the above-described embodiment, the blower 110 is mounted directly to the plastic member 31 (elastic member); however, for example, the blower may be mounted to the elastic member via a bracket or other members.

In the above-described embodiment, the sensor 140 is disposed in a position that does not overlap the position of the duct 120 as viewed from above; however, the sensor may be disposed in a position that overlaps the position of the duct as viewed from above.

In the above-described embodiment, the position of the second end portion 122 of the duct 120 (the portion at which the duct and the air passage are connected to each other) in the front-rear direction overlaps the position of the sensor 140 in the front-rear direction; however, for example, a position of the portion at which the duct and the air passage are connected to each other in the front-rear direction may overlap a position of the sensor in the front-rear direction.

For example, the blower, the blower mounting portion, the duct, the ECU (controller), and the sensor may be located in positions symmetrical to the above-described embodiment and the modifications, in the lateral direction.

In the above-described embodiment, each of the sensor mounting portions 340A and 340B include the recess 344, however, for example, the sensor mounting portions may be configured to not include the recess. In the above-described embodiment, the first pressure-receiving member 30 (pressure-receiving member) includes two sensor mounting portions 340A and 340B on which the sensor 140 is attachable; however, for example, the pressure-receiving member may be configured to include only one sensor mounting portion. In the above-described embodiment, the first pressure-receiving member 30 (pressure-receiving member) includes two through holes 351 and 352 that allow the duct 120 to pass therethrough; however, the pressure-receiving member may be configured to include only one through hole that allows the duct to pass therethrough. The reinforcing wire may not be the wire located in the lateral central portion of the pressure-receiving member.

In the above-described embodiment, the sensor 140 is a pressure sensor; however, the sensor may be, for example, a temperature sensor, a humidity sensor, a sound sensor, a light sensor, a pulse sensor, a breath sensor, a sensor for detecting a movement of the occupant, or a sensor for detecting an amount of perspiration of the occupant.

In the above-described embodiment, the car seat S is configured to blow out air from the top surface of the seat cushion S1; however, for example, the car seat S can be configured to suck in air from the top surface of the seat cushion.

In the above-described embodiment, the invention is applied to the seat cushion S1; however, for example, it may be applied to the seat back. When the invention is applied to the seat back, the front side corresponds to the "occupant side" and the rear side corresponds to the "side opposite to the occupant side". When the invention is applied to the seat back, the "side frames" may be configured to be elongate in the up-down direction perpendicular to the lateral direction.

In the above-described embodiment, the car seat S to be installed in an automobile is given as an example of a vehicle seat; however, the vehicle seat may be a vehicle seat installed in vehicles other than automobiles, such as railroad cars, ships, airplanes, etc. The invention may also be applied, for example, to a seat for use at home.

The elements described in the above embodiment and its modifications may be implemented selectively and in combination.

## Claims

1. A vehicle seat comprising:
a seat frame including left and right side frames disposed laterally apart from each other;
a pressure-receiving member configured to support an occupant, the pressure-receiving member being disposed between the left and right side frames;
a pad configured to cover the seat frame and the pressure-receiving member, the pad including an air passage formed therein;
a blower;
a duct configured to connect the blower and the air passage; and
a sensor capable of acquiring biometric information of the occupant,
wherein the pressure-receiving member comprises a reinforcing wire that extends in a first direction perpendicular to a lateral direction, and
wherein the duct is located on one side in the lateral direction with respect to the reinforcing wire, and the sensor is located on another side in the lateral direction with respect to the reinforcing wire.

2. The vehicle seat according to claim 1, wherein the duct is located on the one side in the lateral direction with respect to a lateral central portion of the pressure-receiving member, and the sensor is located on the another side in the lateral direction with respect to the lateral central portion of the pressure-receiving member.

3. The vehicle seat according to claim 1,
wherein the pressure-receiving member comprises:
a first side wire located on the one side in the lateral direction with respect to the reinforcing wire; and
a second side wire located on the another side in the lateral direction with respect to the reinforcing wire, and
wherein the duct and the sensor are located between the first side wire and the second side wire as viewed from an occupant side.

4. The vehicle seat according to claim 1,
wherein the pressure-receiving member comprises:
a first sensor mounting portion to which the sensor is attachable, the first sensor mounting portion being located on the one side in the lateral direction with respect to the reinforcing wire and adjacent to the reinforcing wire; and
a second sensor mounting portion to which the sensor is attachable, the second sensor mounting portion being located on the another side in the lateral direction with respect to the reinforcing wire and adjacent to the reinforcing wire; and
wherein each of the first sensor mounting portion and the second sensor mounting portion includes a first clamping portion configured to clamp the sensor when the sensor is attached,
wherein the first clamping portion of the first sensor mounting portion is located between a central portion of the first sensor mounting portion and the reinforcing wire in the lateral direction, and
wherein the first clamping portion of the second sensor mounting portion is located between a central portion of the second sensor mounting portion and the reinforcing wire in the lateral direction.

5. The vehicle seat according to claim 4,
wherein each of the first sensor mounting portion and the second sensor mounting portion includes:
a second clamping portion configured to clamp the sensor when the sensor is attached; and
a third clamping portion configured to clamp the sensor when the sensor is attached, the third clamping portion being aligned with the second clamping portion in the first direction.

6. The vehicle seat according to claim 4,
wherein the pressure-receiving member includes:
a first hole configured to allow the duct to pass therethrough, the first hole being located on the one side in the lateral direction with respect to the first sensor mounting portion and adjacent to the first sensor mounting portion; and
a second hole configured to allow the duct to pass therethrough, the second hole being located on the another side in the lateral direction with respect to the second sensor mounting portion and adjacent to the second sensor mounting portion.

7. The vehicle seat according to claim 4, comprising a harness electrically connected to the sensor, the harness extending outward from the sensor toward a side of the sensor opposite to a side on which the first clamping portion is located in the lateral direction.

8. The vehicle seat according to claim 7, wherein each of the first sensor mounting portion and the second sensor mounting portion includes a recess recessed toward a corresponding first clamping portion from an edge opposite to an edge on which the corresponding first clamping portion is located in the lateral direction.

9. The vehicle seat according to claim 1, wherein the pressure-receiving member comprises a plastic member configured to cover the reinforcing wire, the plastic member being made of elastomer.

10. The vehicle seat according to claim 1,
wherein the pressure receiving member includes a through hole that allows the duct to pass therethrough, and a mesh portion forming a web shape, and
wherein an edge of the through hole is thicker than a portion of the mesh portion that forms a mesh as viewed from an occupant side.

11. The vehicle seat according to claim 10, wherein a part of the portion of the mesh portion that forms the mesh is connected to the edge of the through hole.

12. The vehicle seat according to claim 1, wherein the pressure-receiving member comprises a mounting portion configured to attach another member to the pressure-receiving member, the mounting portion including a first mounting portion located frontward of the sensor.

13. A method for manufacturing the vehicle seat according to claim 5, comprising:
a process in which the duct is positioned on the one side in the lateral direction with respect to the reinforcing wire; and
a process in which the sensor is slid in the lateral direction toward the reinforcing wire from the other side in the lateral direction with respect to the reinforcing wire, and engaged with the second clamping portion, the third clamping portion, and the first clamping portion.

14. The vehicle seat according to claim 1,
wherein the blower is attached to the pressure-receiving member,
wherein the pressure-receiving member comprises an elastic member, and
wherein the blower is attached to the elastic member.

15. The vehicle seat according to claim 14, wherein the pressure-receiving member is shaped as a plate.

16. The vehicle seat according to claim 15, wherein the elastic member is made of elastomer.

17. The vehicle seat according to claim 16, wherein the pressure-receiving member comprises the elastic member and a wire covered by the elastic member.

18. The vehicle seat according to any one of claims 14 to 17,
wherein the pressure-receiving member includes a mounting portion configured to attach a member other than the blower to the pressure-receiving member, and
wherein the blower is located in a position that does not overlap a position of the mounting portion as viewed from an occupant side.

19. The vehicle seat according to claim 18, wherein the duct is located in a position that does not overlap the position of the mounting portion as viewed from an occupant side.

20. The vehicle seat according to any one of claims 14 to 17,
wherein the blower is located on a side of the pressure-receiving member opposite to an occupant side of the pressure-receiving member,
wherein the pressure-receiving member includes a through hole, and
wherein the duct extends from a side of the pressure-receiving member opposite to the occupant side of the pressure-receiving member, through the though hole, to the occupant side of the pressure-receiving member.

21. The vehicle seat according to claim 20,
wherein the side frames are elongate in a direction perpendicular to the lateral direction, and
wherein a position of the blower overlaps a position of the through hole in a longitudinal direction of the side frames.

22. The vehicle seat according to any one of claims 14 to 17,
wherein the side frames are elongate in a direction perpendicular to the lateral direction, and
wherein the vehicle seat further comprises a side frame cover configured to cover at least a lateral inner side of one end of one of the side frames in a longitudinal direction of the side frames, and
wherein a position of the blower is closer, than the side frame cover, to another end of the one of the side frames in the longitudinal direction.

23. The vehicle seat according to any one of claims 14 to 17,
wherein the side frames are elongate in a direction perpendicular to the lateral direction, and
wherein the vehicle seat further comprises a side frame cover configured to cover at least a lateral inner side of one end of one of the side frames in a longitudinal direction of the side frames, and
wherein a position of a portion at which the duct and the air passage are connected to each other is located closer, than the side frame cover, to another end of the one of the side frames in the longitudinal direction.

24. The vehicle seat according to any one of claims 14 to 17,
wherein the side frames are elongate in a direction perpendicular to the lateral direction,
wherein the vehicle seat further comprises a side frame cover configured to cover at least a lateral inner side of one end of one of the side frames in a longitudinal direction of the side frames, and
wherein a position of the blower overlaps a position of the side frame cover in the longitudinal direction.

25. The vehicle seat according to any one of claims 14 to 17, wherein the blower is directly attached to the elastic member.
